# EUROPEAN PATENT SPECIFICATION

(11) **EP 3 225 456 B1**
(45) Date of publication and mention of the grant of the patent: **12.02.2020**
(21) Application number: 15862595.4
(22) Date of filing: 26.11.2015
(51) Int. Cl.: B60L 15/20, A61G 5/04, B60L 3/00, B60L 15/10, B60W 30/09, B60W 30/095, G01S 17/93, G01S 7/48, G01S 17/02, G01S 17/42, G01S 17/89, G01S 7/497

(54) **MOVING BODY**
BEWEGLICHER KÖRPER
CORPS MOBILE

(30) Priority: 26.11.2014 JP 2014238626
(43) Date of publication of application: 04.10.2017
(73) Proprietor: Aisin Seiki Kabushiki Kaisha, Kariya-shi, Aichi 448-8650 (JP); Chiba Institute of Technology, Narashino-shi, Chiba 275-0016 (JP)
(72) Inventor: OCHIAI Hirotoshi, Kariya-shi, Aichi-ken, 448-8650 (JP); ANDO Mitsuhiro, Kariya-shi, Aichi-ken, 448-8650 (JP); YANG Seongjun, Kariya-shi, Aichi-ken, 448-8650 (JP); NAGAMINE Noboru, Kariya-shi, Aichi-ken, 448-8650 (JP); TAKAYANAGI Wataru, Kariya-shi, Aichi-ken, 448-8650 (JP); KATO Yukihiro, Kariya-shi, Aichi-ken, 448-8650 (JP); FURUTA Takayuki, Narashino-shi Chiba 275-0016 (JP); SHIMIZU Masaharu, Narashino-shi 275-0016, CHIBA (JP); YAMATO Hideaki, Narashino-shi Chiba 275-0016 (JP); TODA Kengo, Narashino-shi Chiba 275-0016 (JP); KODACHI Takashi, Narashino-shi Chiba 275-0016 (JP)
(74) Representative: Cabinet Beau de Loménie
(86) International application number: PCT/JP2015/083269
(87) International publication number: WO 2016/084910

(56) References cited:
- WO-A1-2014/156222
- JP-A- H0 386 005
- JP-A- H0 386 005
- JP-A- 2000 187 799
- JP-A- 2003 114 277
- JP-A- 2011 022 080
- JP-A- 2014 121 190
- JP-A- 2014 191 485
- US-A1- 2007 046 449

## Description

### [Technical Field]

This invention relates to a movable body, particularly to a movable body that travels by an operation of an occupant thereof.

### [Background Art]

As one form of a movable body which travels by an operation thereof, a movable body disclosed in Patent Literature 1 has been known. As indicated in Figs. 1 and 2 of the Patent literature 1, the movable body is, for example, shown as an electric wheel chair and the electric wheel chair is equipped with an object detecting sensor 19 which detects an object within a detecting area, a motor 5 which drives vehicle wheels of the electric wheel chair and a control circuit 25 which executes a traveling control of the electric wheel chair by controlling the driving amount of the motor 5. The control circuit 25 includes a driving control means which restricts the maximum speed of the electric wheel chair when a detection signal is inputted from the object detecting sensor 19. Thus, an occurrence of possible collision of the electric wheel chair with an obstacle, such as, a pedestrian or the like can be reduced. Patent Literature 2 is also known and discloses a travel safety apparatus for a vehicle including a first object detector having a first detection area and a second object detector having a second detection area.

### [Citation List]

### [Patent Literature]

[Patent Literature 1] JP3(1991)-86005 A
[Patent Literature 2] US 2007/0046449 A1

### [Summary of Invention]

### [Technical Problem(s)]

However, in the case that the obstacle is a movable object such as a pedestrian or the like, such obstacle may move out from the detecting area after the object detecting sensor 19 detected the object. Further, when the obstacle moves and approaches the electric wheel chair from a blind angle position of the detecting area, the obstacle may be deviated from the detecting area and under such situation, since the maximum speed restriction has been released, an occurrence of possible collision between the electric wheel chair and the obstacle cannot be reduced.

Accordingly, this invention was made in consideration with the above-mentioned situation and the objective of the invention is to provide a movable body with a detecting device for detecting an obstacle, in which the movable body can travel with safety and security even in the case where the obstacle, which was detected in a detecting area of the detecting device, moves relative to the movable object and moves out of the detecting area to approach the movable body.

### [Solution to Problem(s)]

In order to solve the above problems, a movable body according to claim 1 is provided.

### [Advantageous Effect of Invention]

According to the invention described above, under a situation that the obstacle and the movable body are approaching each other, even when the obstacle, which was detected in the first area by the detecting device, moves out of the first area, the obstacle can be detected in the second area which is the surrounding area of the movable body. Accordingly, an occurrence of possible collision of the movable body and the obstacle can be reduced and a movable body which can travel with safety and security can be provided.

### [Brief Explanation of Drawings]

[Fig. 1] Fig. 1 is an outline view of a structure of a movable body according to an embodiment of the invention;
[Fig. 2] Fig. 2 is a schematic view of an input information inputted to an operating device of Fig. 1 and vertical axis indicates a front/rear direction of a movable body and a horizontal axis indicates a right/left direction of the movable body;
[Fig. 3] Fig. 3 is a block diagram of the movable body shown in Fig. 1;
[Fig. 4A] Fig. 4A is a first map memorized in a control device shown in Fig. 3 indicating a relationship between a desired straight traveling velocity and a straight traveling velocity of the movable body;
[Fig. 4B] Fig. 4B is a second map memorized in a control device shown in Fig. 3, indicating a relationship between a desired turning velocity and a turning velocity of the movable body;
[Fig. 5] Fig. 5 is a schematic view of a state that an obstacle is detected in the first area by the control device shown in Fig. 3, wherein the vertical axis indicates a front/rear direction of a movable body and the horizontal axis indicates a right/left direction of the movable body;
[Fig. 6A] Fig. 6A is a third map memorized in the control device shown in Fig. 3, indicating a relationship between a shortest distance between the movable body and the obstacle and the restricting driving amount of the driving amount of the driving device under the state that the obstacle is detected in the first area;
[Fig. 6B] Fig. 6B is a fourth map memorized in the control device shown in Fig. 3, indicating a relationship between a shortest distance between the movable body and the obstacle and the restricting driving amount of the driving amount of the driving device under the state that the obstacle is detected in the second area;
[Fig. 7] Fig. 7 is a fifth map memorized in the control device shown in Fig. 3, indicating a relationship between the shortest distance between the movable body and the obstacle and a predetermined moving time;
[Fig. 8] Fig. 8 is a sixth map memorized in the control device shown in Fig. 3, indicating a relationship between the velocity of the movable body and a predetermined detecting distance;
[Fig. 9] Fig. 9 is a schematic view showing a state that a part of the detecting portion of the operating device is detected to be shielded by the control device shown in Fig. 3 wherein the vertical axis indicates a front/rear direction and the horizontal axis indicates a right/left direction;
[Fig. 10] Fig. 10 is a seventh map memorized in the control device shown in Fig. 3, indicating a relationship between the movable body velocity and the shielded ratio judgement value;
[Fig. 11] Fig. 11 is a flowchart of a program executed by the control device shown in Fig. 3; [Fig. 12] Fig. 12 is another flowchart of a program executed by the control device shown in Fig. 3;
[Fig. 13] Fig. 13 is a block diagram showing a first modified embodiment of the embodiment of the movable body according to the invention;
[Fig. 14] Fig. 14 is an eighth map memorized in the control device shown in Fig. 13, indicating a relationship between the shortest distance between the movable body and the obstacle and a predetermined moving distance;
[Fig. 15] Fig. 15 is a second modified embodiment of the embodiment of the movable body according to the invention;
[Fig. 16] Fig. 16 is a ninth map memorized in the control device shown in Fig. 15, indicating a relationship between the movable body velocity and a predetermined shielding time; [Fig. 17] Fig. 17 is a tenth map memorized in the control device shown in Fig. 15, indicating a relationship between the movable body velocity and the shielded ratio change rate judgement value; and
[Fig. 18] Fig. 18 is a flowchart of the program executed by the control device shown in Fig. 15.

### [Preferred Embodiments Implemented by Invention]

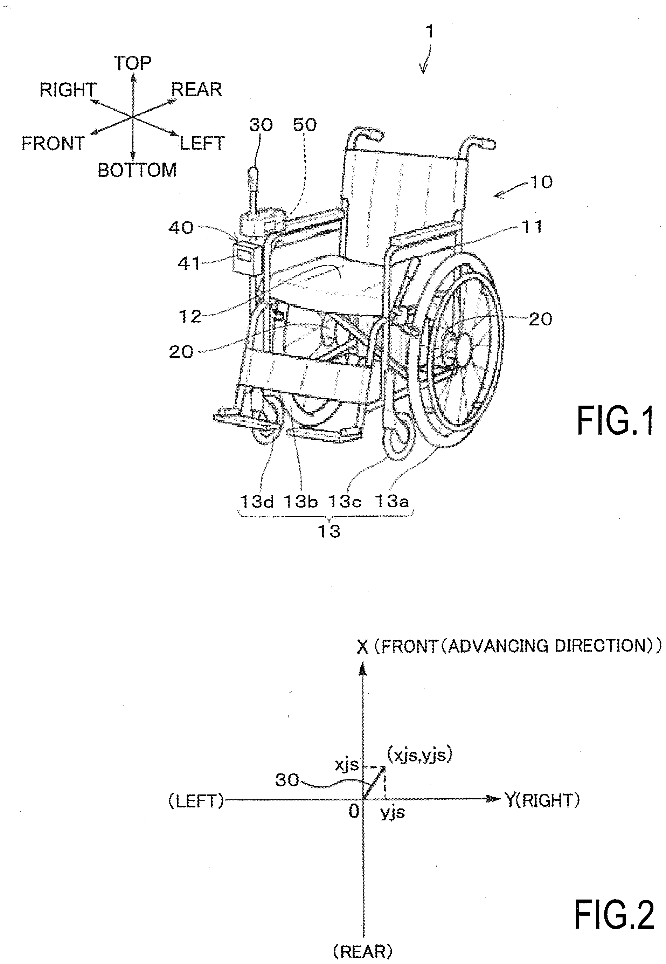

One embodiment of the movable body according to the invention will be explained hereinafter with reference to the attached drawings. As an example of the movable body according to the embodiment, an electric wheel vehicle 1 shown in Fig. 1 will be explained. It is noted that for the purpose of illustration, the explanation will be made assuming that the top side and bottom side of Fig. 1 indicate the upper side and lower side of the electric wheel chair 1. Similarly, the bottom left side and the top right side of Fig. 1 indicate the front side and rear side of the electric wheel chair 1 and the top left side and the bottom right side of Fig. 1 indicate the right side and the left side of the electric wheel chair 1, respectively. The arrows in Fig. 1 indicate respective directions.

The electric wheel chair 1 includes a wheel chair main body 10, a driving device 20, an operating device 30, a detecting device 40 and a control device 50. The electric wheel chair 1 corresponds to the movable body which travels, driven by the driving device 20 which is driven based on the input to the operating device by an occupant of the movable body. The driving device 20, the operating device 30, detecting device 40 and the control device 50 are installed on the wheel chair main body 10.

The wheel chair main body 10 includes a frame 11, a seat 12 on which the occupant is seated and wheels 13. The seat 12 and the wheels 13 are assembled to the frame 11. The wheels 13 are structured to be rotatable about a rotation axis. The wheels 13 are arranged at the right side and the left side of the wheel chair main body 10 and includes a left drive wheel 13a and a right drive wheel 13b which are driven by the driving device 20 and a left auxiliary wheel 13c and a right auxiliary wheel 13d for auxiliary supporting the traveling of the electric wheel chair 1.

The driving device 20 drives the electric wheel chair 1 by rotatably driving the respective driving wheels 13a and 13b. The driving device 20 is, for example, structured by a combination of an electric motor (not shown) and reduction gear mechanism (not shown). The driving device 20 is provided at respective driving wheels 13a and 13b (total number of the driving device 20 is two).

The operating device 30 is operated by the occupant of the electric wheel chair 1 to give instructions regarding to the straight traveling velocity "v" and the turning velocity "w" of the electric wheel chair 1. The straight traveling velocity "v" is a velocity of the electric wheel chair 1 traveling in a forward direction (front direction) with respect to the electric wheel chair 1. The turning velocity "w" is an angular velocity of the electric wheel chair 1 turning around the center of gravity thereof, as a turning center. In this embodiment, a joystick is used as the operating device 30. The position that the operating device 30 is erected upright in a vertical direction is determined to be the non-operated position (hereinafter, referred to as "neutral position"). The operating device 30 is operated by the occupant of the wheel chair 1 by inclining the operating device 30 from the neutral position to an angular position. The operated state of the operating device 30 is indicated by the coordinates of the tip end of the operating device 30, when the operating device 30 is projected onto the X-Y plane which is in parallel with the horizontal plane as shown in Fig. 2. The X-axis is the same direction with the front/rear direction of the electric wheel chair 1 and positive direction of the X-axis is the same with the front direction of the electric wheel chair 1. The Y-axis is the same direction with the right/left direction of the electric wheel chair 1 and the positive direction of the Y-axis is the same with the right direction of the electric wheel chair 1. The value of the X-coordinates indicates a desired straight traveling velocity "xjs" of the electric wheel chair 1 corresponding to the straight traveling velocity desired by the occupant of the wheel chair 1. The value of the Y-coordinates indicates a desired turning velocity "yjs" of the electric wheel chair 1 corresponding to the turning velocity desired by the occupant of the wheel chair 1. The values of the desired straight traveling velocity "xjs" and the desired turning velocity yjs" are outputted to the control device 50, every first predetermined time as the input information inputted to the operating device 30. The first predetermined time is decided to be, for example, 1 / 25 second.

The detecting device 40 is a device which detects an object to be detected. There are two types of the object to be detected, one is an obstacle and the other is a shielding object. The obstacle is an object to be detected which is located in the area apart from the detecting portion 41 of the detecting device 40 by a predetermined detecting distance Ds. The shielding object is an object to be detected which is located in the area within the predetermined detecting distance Ds from the detecting portion 41 of the detecting device 40. The predetermined detecting distance Ds is defined to be a relatively short distance (for example, 10 cm). The predetermined detecting distance Ds is calculated based on the input information from the operating device 30 (this will be explained later). It is noted that in this embodiment, the predetermined detecting distance Ds for detecting the obstacle and the predetermined detecting distance Ds for detecting the shielding object are decided to be equal. However, such predetermined detecting distances Ds of the obstacle and the shielding object can be set differently depending on the situation.

The detecting device 40 is formed by a 3D (three dimensional) measurement area sensor (laser range scanner (3D scanner)). The detecting device 40 obtains the information of the object to be detected on whether or not an object to be detected exists and the distance from the detecting portion 41 to the object to be detected, by (three dimensionally) emitting three laser beams, one dimension in a horizontal direction, the rest two dimensions in up/down directions from the detecting portion 41 and receiving the reflected waves from the object to be detected at the detecting portion 41. The laser beams are emitted towards the front side of the electric wheel chair 1 in a radial direction. The possible laser emitting angular range corresponds to the possible angular range of detecting the object to be detected by the detecting device 40. The detecting device 40 obtains the information on the object to be detected, for example, every first predetermined time. The obtained information on the object to be detected by the detecting device 40 is outputted to the control device 50.

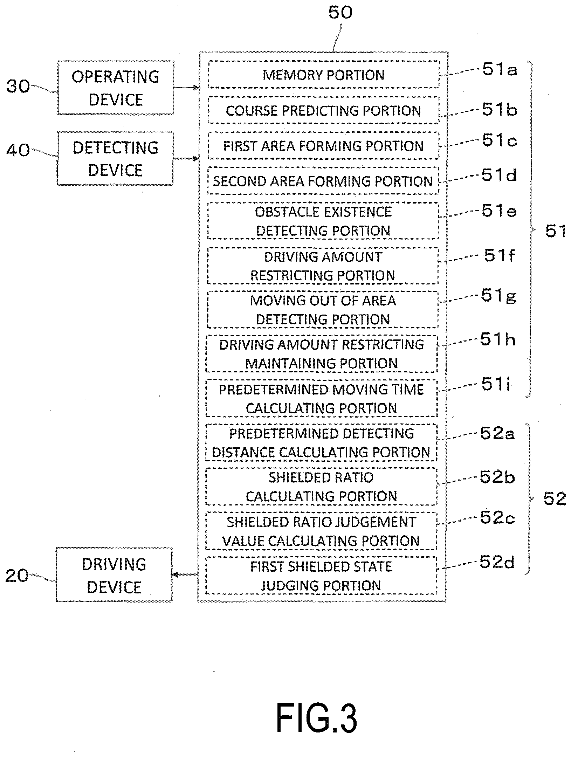

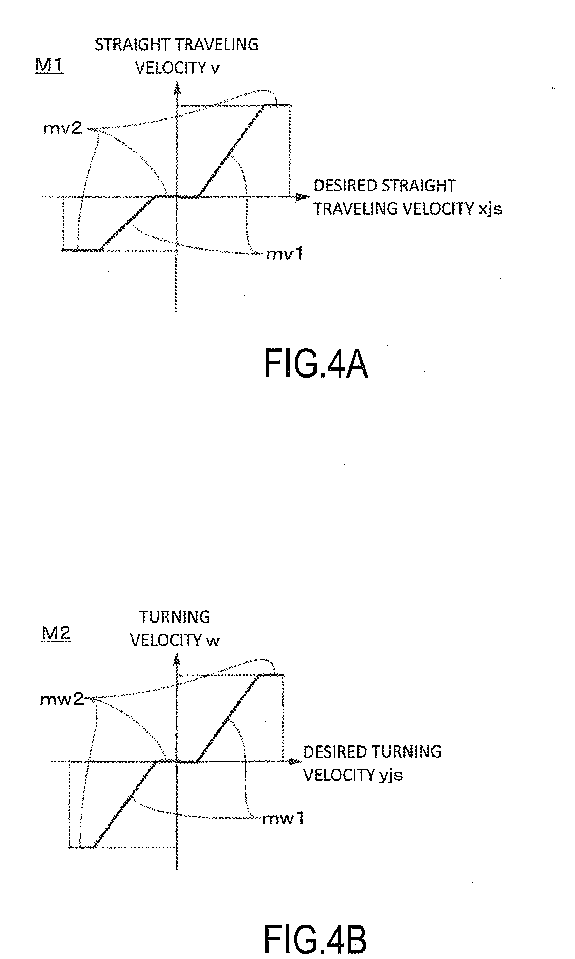

The control device 50 drives the electric wheel chair 1 to travel by controlling the driving amount of the driving device 20 based on the input information, by controlling the driving amount of the driving device 20. The driving device 20, the operating device 30 and the detecting device 40 are connected to the control device 50 as shown in Fig. 3. The traveling control which is a control by the control device 50 to let the electric wheel chair 1 to move, will be explained hereinafter. The control device 50 starts the control at the time when the operating device 30 is operated and the control device 50 obtains the input information from the operating device 30. The control device 50 converts the input information (desired straight traveling velocity "xjs" and the desired turning velocity "yjs") obtained from the operating device 30 into the straight traveling velocity "v" and the turning velocity "w", respectively. The control device 50 calculates the straight traveling velocity "v" from the desired straight traveling velocity "xjs" based on the first map M1 shown in Fig. 4A. The first map M1 indicates the relationship between the desired straight traveling velocity "xjs" and the straight traveling velocity "v". Further the control device 50 calculates the turning velocity "w" from the desired turning velocity "yjs" based on the second map M2 shown in Fig. 4B. The second map M2 indicates the relationship between the desired turning velocity "yjs" and the turning velocity "w".

The first map M1 includes proportional portions mv1 in which the desired straight traveling velocity "xjs" and the straight traveling velocity "v" are proportional and dead zone portions mv2 in which the straight traveling velocity "v" is constant regardless of the magnitude of the desired straight traveling velocity "xjs" as shown in Fig. 4A. When the straight traveling velocity "v" is a positive value, the electric wheel chair 1 moves forward. On the other hand, when the straight traveling velocity "v" is a negative value, the electric wheel chair 1 moves rearward.

Further, as shown in Fig. 4B, the second map M2 includes proportional portions mw1 in which the desired turning velocity "yjs" and the turning velocity "w" are proportional and dead zone portions mw2 in which the turning velocity "w" is constant regardless of the magnitude of the desired turning velocity "yjs". When the turning velocity "w" is a positive value, the electric wheel chair 1 turns in the right direction. On the other hand, when the turning velocity "w" is a negative value, the electric wheel chair 1 turns in the left direction.

The control device 50 controls the driving amount (rotation number) of the driving device 20 based on the converted values of the straight traveling velocity "v" and the turning velocity "w". in detail, the converted values of the straight traveling velocity "v" and the turning velocity "w" are further converted into the rotation speed of the left drive wheel 13a and the rotation speed of the right drive wheel 13b. The magnitude of the straight traveling velocity "v" is proportional to the magnitude of the rotation speed of the left drive wheel 13a and the magnitude of the rotation speed of the right drive wheel 13b. Further, the magnitude of the turning velocity "w" is proportional to the magnitude of the difference in rotation speed between the left drive wheel 13a and the right drive wheel 13b. The relationship between the straight traveling velocity "v" and the turning velocity "w" and the rotation speed of the left drive wheel 13a and the right drive wheel 13b is obtained in advance by calculation through the experimental work or the like. It is noted that since the driving device 20 is PWM (Pulse Width Modulation) -controlled, the control instruction value of the driving device 20 is calculated based on the duty ratio (cycle).

While the control device 50 is executing a traveling control, if the occupant of the electric wheel chair 1 returns the operating device 30 to the neutral position, the straight traveling velocity "v" and the turning velocity "w" become zero (0), and the electric wheel chair 1 stops. Then, the traveling control by the control device 50 is terminated.

Further, the control device 50 includes a collision risk reduction control portion 51 and a detecting portion shielded state detecting portion 52 as shown in Fig. 3. The collision risk reduction control portion 51 executes a collision risk reduction control (later explained) which reduces a possible collision between the electric wheel chair 1 and the obstacle. The collision risk reduction control portion 51 is formed by a memory portion 51a, a course predicting portion 51b, a first area forming portion 51c, a second area forming portion 51d, an obstacle existence detecting portion 51e, driving amount restricting portion 51f, a moving out of area detecting portion 51g, a driving amount restricting maintaining portion 51h and a predetermined moving time calculating portion 51i. The memory portion 51a memorizes data or the like, such as each map M1 and M2 and a polar coordinates C (later explained) used upon execution of a control program.

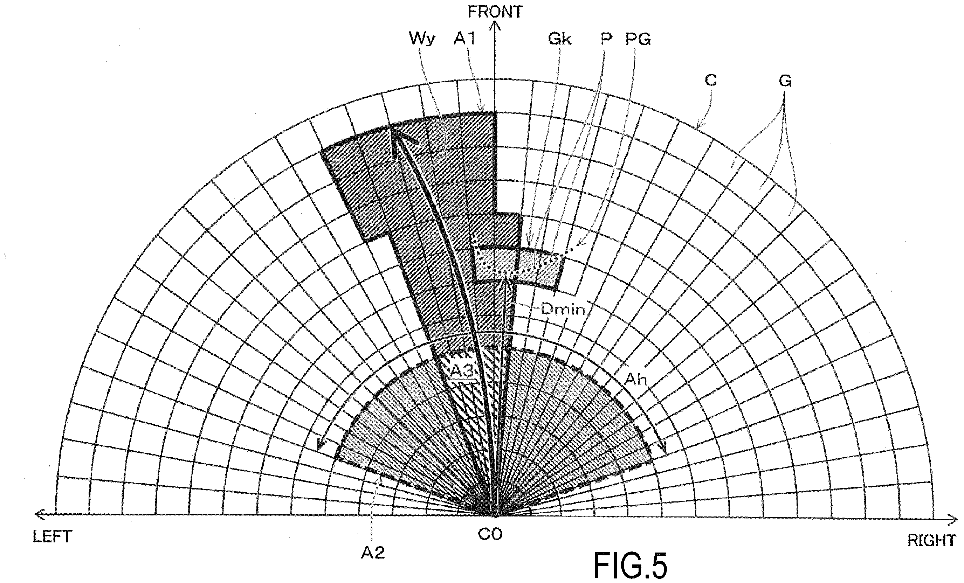

The course predicting portion 51 b predicts the traveling course of the electric wheel chair 1 based on the input information. The course predicting portion 51b predicts the course of the electric wheel chair 1 on the polar coordinates C, as shown in Fig. 5. The polar coordinates C is arranged in parallel with the horizontal plane, having a point of origin C0 corresponding to the position of the detecting portion 41 of the detecting device 40 and the polar coordinates of Fig. 5 indicates the top side of the coordinates corresponding to the front side of the electric wheel chair 1 and the polar coordinates C includes a plurality of grids G, each delimited in both radial and circumferential directions with a predetermined distance apart from each other in radial and circumferential directions (for example, having an interval of 50 cm in a radial direction and five degrees in a radial direction). The predicted course Wy which is the course of the electric wheel chair 1 predicted by the course predicting portion 51b is indicated concretely as a linear traveling trace that the detecting portion 41 is predicted to be passing through from the time when the control device 50 obtains the input information to the time when the second predetermined time (for example, five seconds) has passed. The predicted course Wy is formed based on a predetermined function derived from an actual measurement by an experimental work or the like in advance from the straight traveling velocity "v" and the turning velocity "w". The predicted course Wy is formed (renewed) every first predetermined time from the time when the control device 50 obtains the input information from the operating device 30.

The first area forming portion 51c forms a first area A1 which extends in a traveling direction of the predicted course Wy which is the course of the electric wheel chair 1 predicted by the course predicting portion 51b. The first area A1 is formed to include the grids G where the predicted course Wy is positioned on the polar coordinates C. According to this embodiment, the first area A1 is formed to be of approximately a sector shape extending along in a traveling course of the predicted course Wy, for example, by the grids G where the predicted course Wy is positioned and a plurality of grids G neighboring the grids G on which the predicted course Wy is positioned (for example, two neighboring grids at respective sides) in the circumferential direction. The shape of the first area A1 is variable depending on the change of the predicted course Wy due to the change of the input information.

The second area forming portion 51d forms the second area A2 which has a predetermined size along in the traveling direction of the predicted course Wy. The second area A2 is an area defined considering a space of personal area, where a person feels uncomfortable if someone else approaches to the space. In detail, the second area A2 is a surrounding area located within a predetermined distance from the electric wheel chair 1 (center of gravity thereof). The predetermined distance may be set to a relatively short distance (for example, 2 m). The second area is formed to be of a sector shape having the size set in advance with the point of origin CO on the polar coordinates C as the center of the sector shape. According to the embodiment, the angular range of the second area A2 is set such that the angular range in the circumferential direction becomes larger than that of the first area A1 and that the width (maximum length of the length in right/left direction) of the second area A2 becomes larger than the width (maximum length of the length in right/left direction) of the electric wheel chair 1. In more detail, the length in a radial direction of the second area A2 is set to be the length corresponding to the length of the five grids from the point of origin CO in each direction. The angular range in the circumferential direction of the second area A2 is set to the same angular range with a detectable angular range "Ah" which corresponds to the angular range in the circumferential direction on the polar coordinates, in which area, the detecting device 40 can detect the object to be detected.

The obstacle existence detecting portion 51 e detects whether any obstacle exists or not in the first area A1 formed by the first area forming portion 51c and the second area A2 formed by the second area forming portion 51d based on the information on the object to be detected which is detected by the detecting device 40. The obstacle existence detecting control which executes detection of an obstacle by the obstacle existence detecting portion 51e will be explained hereinafter. First, the information on the object to be detected from the detecting device 40 is projected on the polar coordinates C. The information on the object to be detected includes a coordinates data of group of points PG formed by a plurality of points P which indicates the three-dimensional positional information of the object to be detected. The grid G which has equal to or more than a predetermined number of points P forming the group of points PG projected on the polar coordinates C is considered to be the grid Gk of the object to be detected which is the grid G on which the object to be detected exists. The predetermined number is, for example, set to be five (5). When the grid Gk of the object to be detected is in the first area A1, the obstacle existence detecting portion 51e detects that an obstacle exists in the first area A1. Further, when the grid Gk of the object to be detected is in the second area A2, the obstacle existence detecting portion 51e detects that an obstacle exists in the second area A2. On the other hand, when the grid Gk of the object to be detected is not found in the first area A1, the obstacle existence detecting portion 51e detects that an obstacle does not exist in the first area A1. Further, when the grid Gk of the object to be detected is not found in the second area A2, the obstacle existence detecting portion 51e detects that any obstacle does not exist in the second area A2. Since the information on the object to be detected is obtained every first predetermined time, the obstacle existence detecting control by the obstacle existence detecting portion 51e is executed every first predetermined time. In other words, the result of detecting whether any obstacle exists in the first area A1 and the second area A2 is renewed every first predetermined first time. It is noted that the state indicated in Fig. 5 is that the obstacle exists in the first area A1 and that the obstacle does not exist in the second area A2.

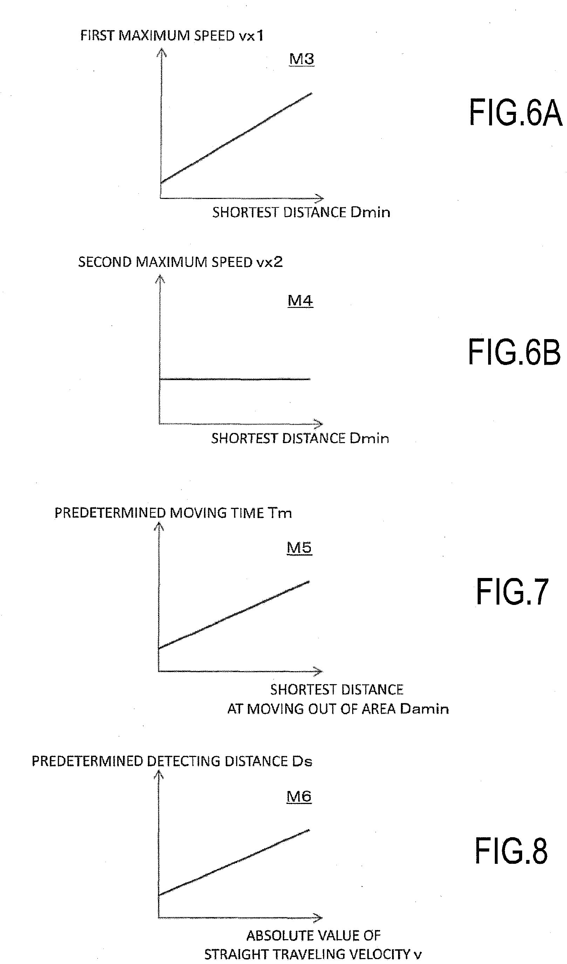

The driving amount restricting portion 51f restricts the driving amount of the driving device 20 to the restricting driving amount while an obstacle is being detected at least one of the first area A1 and the second area A2 by the obstacle existence detecting portion 51e. According to the embodiment, the restricting driving amount is defined to be the driving amount of the driving device 20 that the maximum driving amount is restricted. In other words, by restricting the maximum driving amount of the deriving device 20 to the restricting driving amount, the maximum speed of the straight traveling velocity "v" is restricted. In more detail, the driving amount restricting portion 51f restricts the maximum speed of the straight traveling velocity "v" to a first maximum straight traveling velocity "vx1", while an obstacle is being detected in the first area A1. The first maximum straight traveling velocity "vx1" is calculated from the shortest distance Dmin from the electric wheel chair 1 (detecting portion 41 of the detecting device 40 (point of origin CO)) to the obstacle (See Fig. 5) based on the third map M3 illustrated in Fig. 6A. The shortest distance Dmin can be calculated from the information on the object to be detected. The shortest distance Dmin is calculated by the driving amount restricting portion 51f, while the obstacle is being detected by the obstacle existence detecting portion 51e. The third map M3 indicates the relationship between the shortest distance Dmin and the first maximum straight traveling velocity "vx1". Regarding to the relationship between the shortest distance Dmin and the first maximum straight traveling velocity "vx1", the smaller the shortest distance Dmin, the smaller the first maximum straight velocity "v" becomes.

Further, the driving amount restricting portion 51f restricts the maximum speed of the straight traveling velocity "v" to a second maximum straight traveling velocity "vx2", while an obstacle is being detected in the second area A2. The second maximum straight traveling velocity "vx2" is calculated from the shortest distance Dmin based on the fourth map M4 illustrated in Fig. 6B. The fourth map M4 indicates the relationship between the shortest distance Dmin and the second maximum straight traveling velocity "vx2". The second maximum straight traveling velocity "vx2" is set to be always constant regardless of the length of the shortest distance Dmin. It is noted that if an obstacle is detected in an overlapping area A3 which overlaps with the first area A1 and the second area A2 (See Fig. 5), the maximum speed of the straight traveling velocity "v" is restricted to one of the first maximum straight velocity "vx1" and the second maximum straight traveling velocity "vx2", whichever the smaller one, by comparing the two values of the velocity "vx1" and "vx2"..

The moving out of area detecting portion 51g detects that the obstacle, which was detected in the first area A1 by the obstacle existence detecting portion 51e, is detected to have relatively moved out of the first area A1. The result of detection of the obstacle by the obstacle existence detecting portion 51e is inputted to the moving out of area detecting portion 51g. The result of detection of the obstacle is defined that the result of detection whether an obstacle exists or not in the first area A1. For example, if an obstacle is moving within the first area A1, the detection result that "an obstacle is detected in the first area A1" is inputted to the moving out of area detecting portion 51g. Thereafter, if the obstacle moves out of the first area A1, the detection result that "the obstacle is not detected in the first area A1" is inputted to the moving out of area detecting portion 51g. Therefore, the moving out of area detecting portion 51g detects that the obstacle has relatively moved and is out of the first area A1, when the detecting information from the obstacle existence detecting portion 51e has changed from the "obstacle is detected in the first area A1" to the "obstacle is not detected in the first area A1".

The driving amount restricting maintaining portion 51h maintains the driving amount of the driving device 20 to the restricting driving amount for a predetermined moving time Tm after a time when the obstacle was detected to have moved out of the first area A1 by the moving out of area detecting portion 51g. In other words, the driving amount restricting maintaining portion 51h maintains the restricting driving amount which is the same amount at the time when the obstacle is detected to have been in the first area A1, for the predetermined moving time Tm after the obstacle, once detected in the first area A1, was detected to have moved out of the first area A1. The predetermined moving time Tm is defined to be the time from the time when the obstacle, which was once detected in the first area A1, was detected to have relatively moved out of the first area A1 to the time when the obstacle is presumed to have passed by the electric wheel chair 1. Such predetermined moving time Tm is calculated by the predetermined moving time calculating portion 51i.

The predetermined moving time calculating portion 51i calculates the predetermined moving time "Tm" from the shortest distance Dmin between the electric wheel chair 1 and an obstacle. The predetermined moving time Tm is calculated based on the shortest distance "Damin" which is the shortest distance Dmin at the time the obstacle is detected to have relatively moved out of the first area A1, after once detected to have existed in the first area A1. The predetermined moving time calculating portion 51i calculates the predetermined moving time Tm from the shortest distance (Damin) at the time of moving out of the area, based on the fifth map M5 indicated in Fig. 7.The fifth map M5 indicates the relationship between the shortest distance (Damin) at the time of moving out of the area and the predetermined moving time Tm. This relationship between the shortest distance (Damin) at the time of moving out of the area and the predetermined moving time Tm is set such that the smaller the shortest distance (Damin) at the time of moving out of the area, the smaller the predetermined moving distance Tm becomes.

The detecting portion shielded state detecting portion 52 executes a detecting portion shielded state detection control (later described) and detects whether the detecting device 40 is in a shielded state or not by the detection control. The shielded state is a state that the detecting portion 41 of the detecting device 40 is shielded by a person standing in front of the electric wheel chair 1 or covered by a cloth or the like and cannot detect an obstacle. The detecting portion shielded state detecting portion 52 is formed by a predetermined detecting distance calculating portion 52a, a shielded ratio calculating portion 52b, a shielded ratio judgement value calculating portion 52c and a first shielded state judging portion 52d. (See Fig. 3).

The predetermined detecting distance calculating portion 52a calculates a predetermined detecting distance Ds based on the input information from the operating device 30. The predetermined detecting distance Ds is calculated from the converted straight traveling velocity "v" converted according to the input information, based on the sixth map M6 indicated in Fig. 8. The sixth map M6 indicates the relationship between the magnitude of the straight traveling velocity (absolute value |v| of the straight traveling velocity "v") and the predetermined detecting distance Ds. The relationship between the magnitude of the straight traveling velocity "lvl" and the predetermined detecting distance Ds is set such that the smaller the magnitude of the straight traveling velocity, the smaller the predetermined detecting distance Ds becomes.

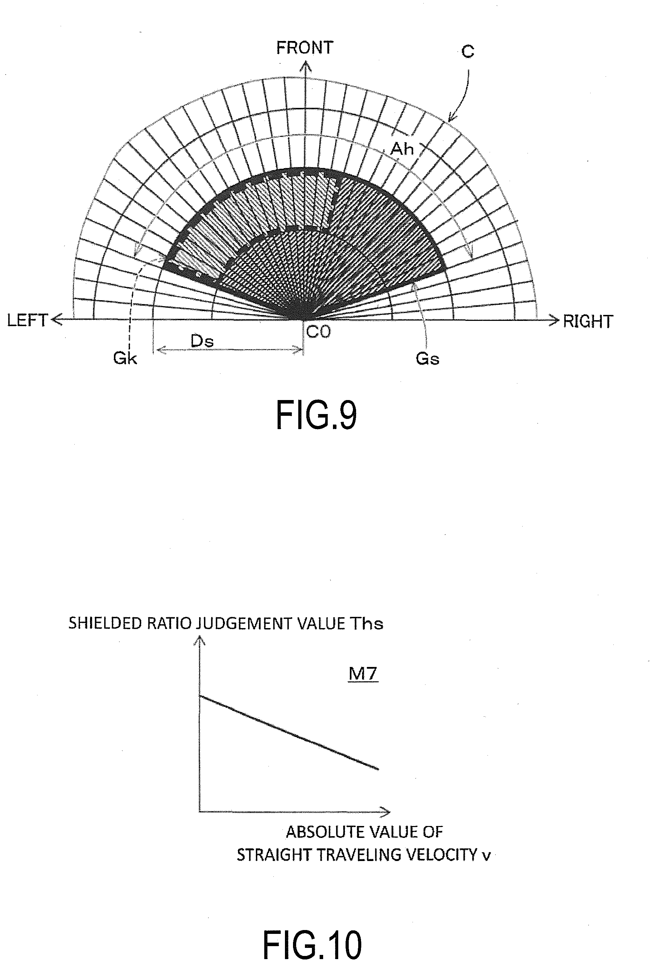

The shielded ratio calculating portion 52b calculates the ratio of the angular range occupied by a shielding object which is the object to be detected by the detecting device 40 within the predetermined detecting distance Ds from the detecting portion 41 of the detecting device 40 relative to a detectable angular range Ah within which the detecting device 40 can detect the object to be detected, as a shielded ratio Rs that is the ratio of the shielded area of the detecting portion 41 of the detecting device 40. In more detail, in Fig. 9, the grids G located within the predetermined detecting distance Ds from the point of origin CO in a radial direction in the detectable angular range Ah of the polar coordinates C are defined to be the shielded ratio calculating grid Gs for calculating the shielded ratio Rs. The shielded ratio Rs is calculated based on the number of object to be detected grids Gk in a circumferential direction within the shielded ratio calculating grids Gs and the number of shielded ratio calculating grids Gs in a circumferential direction. Concretely, the shielded ratio is a ratio of the number of object to be detected grids Gk in a circumferential direction within the shielded ratio calculating grids Gs relative to the number of shielded ratio calculating grids Gs in a circumferential direction. (shielded ratio Rs = (the number of object to be detected grids Gk in circumferential direction / the number of shielded ratio calculating grids Gs in a circumferential direction) x 100). It is noted that the number of shielded ratio calculating grids Gs in the circumferential direction is twenty-eight (28) and the number of object to be detected grids Gk in the circumferential direction within the shielded ratio calculating grids Gs is seventeen (17) in Fig. 9. Accordingly, the shielded ratio Rs is about sixty-one (61) ( = (17 / 28) x 100) %.

The shielded ratio judgement value calculating portion 52c calculates the shielded ratio judgement value "Ths" based on the input information from the operating device 30. The shielded ratio judgement value "Ths" is a judgment value used for a judgement whether the detecting device 40 is shielded or not, judged by the first shielded state judging portion 52d. The shielded ratio judgement value "Ths" is calculated from the straight traveling velocity "v" converted based on the input information based on the seventh map M7 indicated in Fig. 10. The seventh map M7 indicates a relationship between the magnitude of the straight traveling velocity "v" (absolute value |v| of straight traveling velocity "v") and the shielded ratio judgement value "Ths". This relationship between the magnitude of the straight traveling velocity "v" and the shielded ratio judgement value "Ths" is set such that the smaller the magnitude of the straight traveling velocity "v", the larger the shielded ratio judgement value "Ths" becomes.

The first shielded state judging portion 52d judges that the detecting device 40 is in a shielded state where the detecting device 40 cannot detect an obstacle when the shielded ratio Rs calculated by the shielded ratio calculating portion 52b is equal to or more than the shielded ratio judgement value "Ths" calculated by the shielded ratio judgement value calculating portion 52c. On the other hand, the first shielded state judging portion 52d judges that the detecting device 40 is not in a shielded state and that the detecting device 40 can properly detect an obstacle, when the shielded ratio Rs is less than the shielded ratio judgement value "Ths".

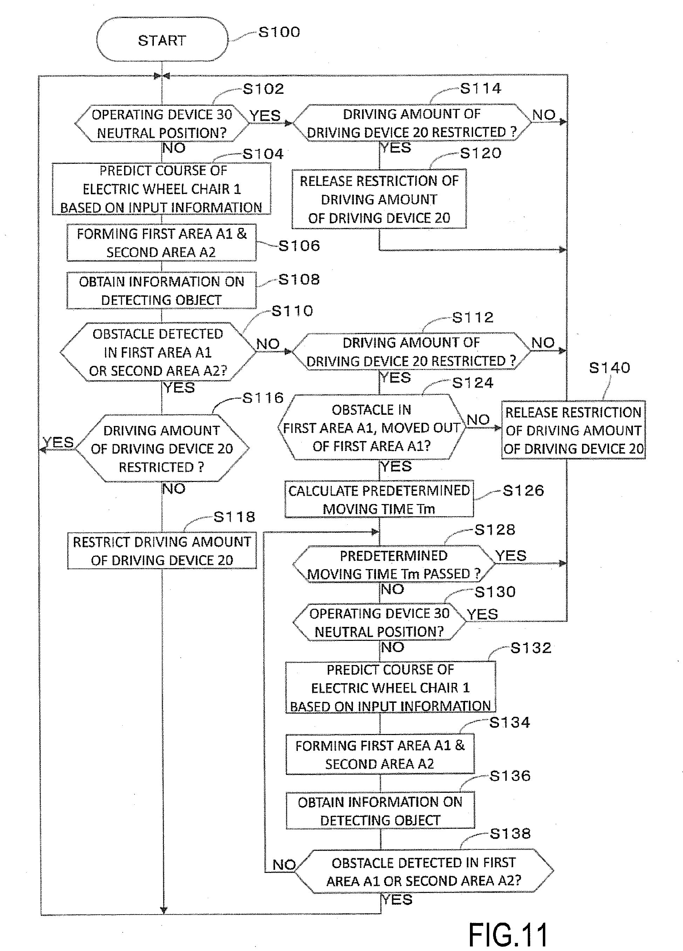

Next, a collision risk reduction control by the control device 50, which reduces possible collision risk occurred between the electric wheel chair 1 and an obstacle, will be explained with reference to the flowchart shown in Fig. 11. The collision risk reduction control is a control where a risk of collision between the electric wheel chair 1 and an obstacle by providing a time delay to the operation by the occupant of the wheel chair 1 to avoid possible collision with the obstacle, by restricting the traveling speed of the electric wheel chair 1, when the obstacle is on the way of the predicted course Wy while the electric wheel chair 1 is in traveling operation.

First, the control where any obstacle is not detected in each of the first area A1 and the second area A2 (as a first case), while the electric wheel chair 1 is in traveling operation by an occupant of the wheel chair 1 by operating the operating device 30, will be explained. The control device 50 judges whether the position of the operating device 30 is in a neutral position or not (Step S102). If the electric wheel chair 1 is in traveling control, the operating device 30 is not in the neutral position and accordingly, the control device 50 judges as "NO" at the step S102. The control device 50 predicts the traveling course of the electric wheel chair 1 based on the input information from the operating device 30 (Step S104; course predicting portion 51b) The control device 50 forms the first area A1 and the second area A2 (Step S106; first area forming portion 51c and second area forming portion 51d) and obtains the information on the object to be detected from the detecting device 40 (Step S108).

Then, the control device 50 judges whether an obstacle is detected or not in the first area A1 or in the second area A2 (Step S110; obstacle existence detecting portion 51e). In this first case, an obstacle is not detected in either of the areas A1 and A2 and accordingly, the control device 50 judges as "NO" at the step S110 and the program goes to the step S112. The control device 50 judges at the step S112, whether the driving amount of the driving device 20 is restricted or not. In this case, since the restriction of the driving amount is not performed by the driving amount restricting portion 51f, the control device 50 judges as "NO" at the step S112 and returns the program to the step S102. Thus, when the electric wheel chair 1 is in traveling operation, since the obstacle is not detected in the first and the second areas A1 and A2, the processes of steps S102 through S112 are repeatedly executed.

Further, while the processes of steps S102 through S112 are repeatedly executed, the occupant of the electric wheel chair 1 returns the position of the operating device 30 to the neutral position for stopping the wheel chair 1, the control device 50 judges as "YES" at the step S102 and the program goes to the step S114. At this time, since the restriction of the driving amount by the driving amount restricting portion 51f is not made, the control device 50 judges as "NO" at the step S114 and returns the program to the step S102. The control device 50 repeats the processes of steps S102 and S114 until the operating device 30 is operated.

Next, the control where an obstacle is detected in the first area A1 or the second area A2 (as a second case) while the electric wheel chair 1 is in traveling operation, will be explained. The control device 50 judges whether an obstacle is detected or not in either the first area A1 or the second area A2 (Step S110; obstacle existence detecting portion 51e), after executing the processes of steps S102 through S108 as same with the first case. According to this second case, since an obstacle is detected in either one of the first and the second areas A1 and A2, the control device 50 judges as "YES" at the step S110 and advances the program to the step S116. The control device 50 judges at the step S116 whether the restriction of the driving amount of the driving device 20 is made or not. At this time, since the restriction of the driving amount by the driving amount restricting portion 51f is not made, the control device 50 judges at the step S116 as "NO". Then, the control device 50 restricts the driving amount of the driving device 20 (Step S118; driving amount restricting portion 51f) and returns the program to the step S102.

When the state that the object to be detected is detected in the first area A1 or in the second area A2 further continues, the control device 50 executes the processes of the steps S102 through S108 and at the step S110, the control device 50 judges that an obstacle is detected in the first area A1 or in the second area A2 (Step S110; judgement "YES") and the program goes to the step S116. At this time, since the driving amount restriction is made by the driving amount restricting portion 51f, the control device 50 judges as "YES" at the step S116 and returns the program to the step S102. As explained, when the state that the object to be detected is detected in the first area A1 or in the second area A2 further continues, the control device 50 repeatedly executes the processes of the steps S102 through S116.

Further, while the execution of the steps S102 through S116 is repeatedly made, if the occupant of the electric wheel chair 1 changes the position of the operating device 30 to the neutral position for stopping the electric wheel chair 1, the control device 50 judges as "YES" at the step S102 and advances the program to the step S114. At this time, since the driving amount restriction is made by the driving amount restricting portion 51f, the control device 50 judges as "YES" at the step S114 and releases at the step S120 the restriction of the driving amount of the driving device 20 by the driving amount restricting portion 51f. Then the control device 50 returns the program to the step S102. The control device 50 repeatedly executes the processes of the steps S102 and S114 until the operating device 30 is operated.

Next, the control, where the obstacle once detected in the first area A1 moved relatively out of the first area A1 (third case), will be explained. When the obstacle is detected in the first area A1, as is the same with the second case, the control device 50 executes the processes of the steps S102 through S116 repeatedly and when the obstacle in the first area A1 is detected to be out of the first area A1 by a relative movement of the obstacle, the control device 50 judges as "NO" at the step S110. Then, the control device 50 detects that the obstacle has moved out of the first area A1, based on the detecting result of the obstacle existence detecting portion 51e (moving out of area detecting portion 51g). Then , since the driving amount of the driving device 20 is restricted by the driving amount restricting portion 51f, the control device 50 judges as "YES" at the step S112 and then judges whether the obstacle in the first area A1 has moved out of the first area A1 or not at the step S124. At this time, since the control device 50 detects that the obstacle has moved out of the first area A1 and accordingly, the control device 50 judges as "YES" at the step S124 and advances the program to the step S126.

The control device 50 calculates the predetermined moving time Tm (Step S126; predetermined moving time calculating portion 51i) and judges whether or not the predetermined moving time Tm has passed from the time when the moving out of area detecting portion 51g detected that the obstacle has moved out of the first area A1. (Step S128). If the predetermined moving time Tm has not yet passed and that the traveling control under the state that the obstacle is not detected in the first area A1 and the second area A2 is continuing, the control device 50 executes the processes of the steps S128 through S138 repeatedly to thereby maintain the state that the driving amount of the driving device 20 is restricted. (driving amount restricting maintaining portion 51h). In more detail, the control device 50 judges as "NO" at the step S128, when the predetermined moving time Tm has not passed and judges at the step S130 whether the operating device 30 is positioned at the neutral position or not. When the electric wheel chair 1 is in traveling control, the position of the operating device 30 is not at the neutral position and accordingly, the control device 50 judges as "NO" at the step S130. Then, the control device 50 predicts the course of the electric wheel chair 1 based on the input information (Step S132; course predicting portion 51b) and forms the first area A1 and the second area A2 (Step S134; first area forming portion 51c, second area forming portion 51d). The control device 50 obtains the information on the object to be detected (Step S136) and judges whether an obstacle is detected in the first area A1 or the second area A2. (Step S138; obstacle existence detecting portion 51e). If the obstacle is not detected in the first area A1 and the second area A2, the control device 50 judges as "NO" at the step S138 and returns the program to the step S128.

While the control device 50 executes the processes of the steps S128 through S138 repeatedly, if an obstacle is detected in the first area A1 or in the second area A2, the control device 50 judges at the step S138 as "YES" and returns the program to the step S102, maintaining the state that the driving amount of the driving device 20 is restricted by the driving amount restricting portion 51f. Further, while the control device 50 is executing the processes of the steps S128 through S138 repeatedly, when the occupant of the electric wheel chair 1 changes the position of the operating device 30 to the neutral position for stopping the electric wheel chair 1, the control device 50 judges as "YES" at the step S130 and advances the program to the step S140. The control device 50 releases the restriction of the driving amount of the driving device 20 by the driving amount restricting portion 51f and returns the program to the step S102.

On the other hand, the control device 50 judges as "YES" at the step S128, when the predetermined moving time Tm has passed and advances the program to the step S140. At the step S140, the control device 50 releases the restriction of the driving amount of the driving device 20 by the driving amount restricting portion 51f and returns the program to the step S102.

Next, in the case that the obstacle after having entered into the second area A2 from outside thereof moved out of the second area A2 from the inside thereof, while the electric wheel chair 1 is in traveling control, will be explained hereinafter (fourth case). In this fourth case, under the electric wheel chair 1 and an obstacle are approaching each other, one example is the case that the obstacle once detected in the first area A1, relatively moved out of the first area A1 and thereafter entered into the second area A2, and another example is the case that the obstacle never entered into the first area A1, enters into the second area A2. If the obstacle is detected in the second area A2, the control device 50 executes the processes of the steps of S102 through S116 repeatedly as similar to the second case above. When the obstacle moved out of the second area A2 from the inside of the second area A2, the control device 50 judges as "NO" at the step S110 and advances the program to the step S112. At this time, since the obstacle has moved out of the second area A2 from the inside thereof, the moving out of area detecting portion 51g does not detect that the obstacle has moved out of the first area A1. Further, since the driving amount of the driving device 20 is restricted by the driving amount restricting portion 51f, the control device 50 judges as "YES" at the step S112 and since the moving out of area detecting portion 51g does not detect that the obstacle has moved out of the first area A1, the control device 50 judges as "NO" at the step S124 and advances the program to the step S140. At the step S140, the control device 50 releases the restriction of the driving amount of the driving device 20 by the driving amount restricting portion 51f and returns the program to the step S102..

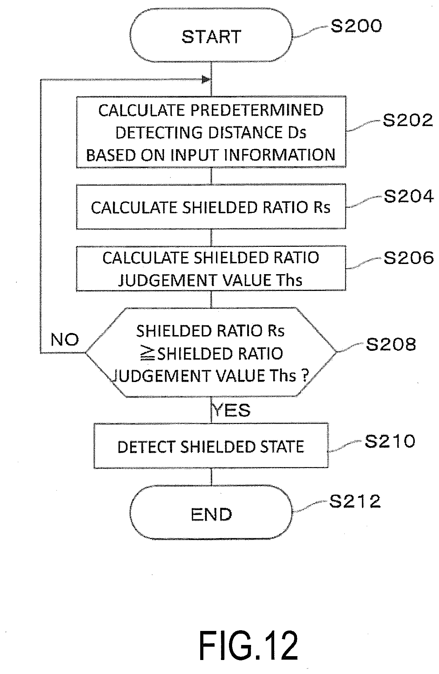

Next, the detecting portion shielded state detecting control executed by the control device 50 will be explained hereinafter with reference to the flowchart indicated in Fig. 12, The detecting portion shielded state detecting control is a control which detects whether the detecting device 40 is in the shielded state or not. The detecting portion shielded state detecting control is made in the time while the electric wheel chair 1 is in ON state.

The control device 50 calculates the predetermined detecting distance Ds based on the input information from the operating device 30(Step S202; predetermined detecting distance calculating portion 52a) and then calculates the shielded ratio Rs (Step S204; shielded ratio calculating portion 52b). Then, the control device 50 calculates the shielded ratio judgement value "Ths" (Step S206; shielded ratio judgement value calculating portion 52c) and judges whether or not the shielded ratio calculated by the shielded ratio calculating portion 52b is equal to or more than the shielded ratio judgement value "Ths" calculated by the shielded ratio judgement value calculating portion 52c (Step S208; first shielded state judging portion 52d). Since the detecting portion 41 of the detecting device 40 is not shielded, when the shielded ratio Rs is less than the shielded ratio judgement value "Ths", the control device 50 judges as "NO" at the step S208 and returns the program to the step S202. On the other hand, for example, if the shielded ratio Rs is equal to or greater than the shielded ratio judgement value "Ths" due to a covering or a shielding by a cloth or the like, the control device 50 judges as "YES" at the step S208 and at the step S210, detects that the detecting device 40 is in a shielded state. In this case, the control device 50 stops the traveling control of the electric wheel chair 1, if the traveling control of the electric wheel chair 1 is under execution. Further, if an information device such as a buzzer (not shown) or the like, which informs the occupant of such state, the control device 50 informs that the detecting device 40 is in a shielded state by using the information device.

According to the embodiment, the electric wheel chair 1 is driven by the driving device 20 which is driven according to the input to the operating device 30 by the occupant and the electric wheel chair 1 includes the detecting device 40 which detects the object to be detected and the control device 50 which drives the electric wheel chair 1 by controlling the driving amount of the driving device 20 based on the input information inputted to the operating device 30. The control device 50 includes the first area forming portion 51c which forms the first area A1 extending along in the traveling direction of the predicted course Wy of the electric wheel chair 1, which is predicted based on the input information, the obstacle existence detecting portion 51e which detects whether or not an obstacle which is the object to be detected exists within the first area A1 and the second area A2 defined as the surrounding area which is predetermined distance apart from the electric wheel chair 1 and the driving amount restricting portion 51f which restricts the driving amount of the driving device 20 to the restricting driving amount, while an obstacle is detected in either one of the first area A1 and the second area A2 by the obstacle existence detecting portion 51e. According to the structure explained above, when the obstacle and the electric wheel chair 1 are approaching each other, even the obstacle which was first detected in the first area A1 has moved out of the first area A1, such obstacle can be detected in the second area A2 which is the surrounding area of the movable body. Accordingly, possible collision between the obstacle and the electric wheel chair 1 can be reduced and at the same time the traveling of the electric wheel chair 1 is safely and securely controlled to provide an electric wheel chair with safety and security in operation. Further, even when the electric wheel chair 1 and an obstacle are passing by each other, a concern of the occupant about a possible collision of the electric wheel chair 1 with an obstacle can be relieved.

Further, the control device 50 further includes the driving amount restricting maintaining portion 51h which maintains the driving amount of the driving device 20 to the restricting driving amount for the predetermined moving time Tm during which the electric wheel chair 1 moves after the detection result by the obstacle existence detecting portion 51e changes from the detection that the obstacle is detected in the first area A1 to the detection that the obstacle is not detected in the first area A1. According to the structure explained above, under the state that the obstacle and the electric wheel chair 1 are approaching each other, even the obstacle once detected in the first area A1 has moved out of the first area A1, the electric wheel chair 1 maintains the driving amount to the same amount at the time the obstacle is detected in the first area A1 for the predetermined moving time Tm from the time when the obstacle has moved out of the first area A1. Therefore, for example, the wheel chair 1 maintains the state that the maximum speed of the electric wheel chair 1 is restricted until the obstacle passes by the electric wheel chair 1. Accordingly, a possible collision with the obstacle can be surely reduced. Further, even when the electric wheel chair 1 and an obstacle are passing by each other, a concern of the occupant about the possible collision of the electric wheel chair 1 with an obstacle can be relieved.

Further, the width of the second area A2 is set to be wider than the width of the electric wheel chair 1. Accordingly, when the obstacle and the electric wheel chair 1 approach each other, even the obstacle once detected by the detecting device 40 in the first area A1 moved out of the first area A1, the obstacle can be surely detected in the second area A2. According to the structure above, the driving amount of the driving device 20 is restricted by the driving amount restricting portion 51f. This can further surely reduce the possible collision of the electric wheel chair 1 with the obstacle. In addition, even when the electric wheel chair 1 and an obstacle are passing by each other, a concern by the occupant of the electric wheel chair 1 about a possible collision with the obstacle can be relieved.

The control device 50 further includes the shielded ratio calculating portion 52b which calculates the ratio of the angular range occupied by a shielding object which is the object to be detected by the detecting device 40 within the predetermined detecting distance Ds from the detecting portion 41 of the detecting device 40 relative to the detectable angular range Ah within which the detecting device 40 can detect the object to be detected, as a shielded ratio Rs that is the ratio of the shielded area of the detecting portion 41 of the detecting device 40 and the first shielded state judging portion 52d which judges that the detecting device 40 is in a shielded state where the detecting device 40 cannot detect the obstacle when the shielded ratio Rs calculated by the shielded ratio calculating portion 52b is equal to or more than the shielded ratio judgement value "Ths". According to the structure explained above, for example, when the detecting portion 41 of the detecting device 40 is shielded by the object to be detected and the shielded ratio Rs calculated by the shielded state calculating portion 52b becomes equal to or more than the shielded ratio judgement value "Ths", the control device 50 judges that the detecting device 40 is in a shielded state that the obstacle cannot be detected by the first shielded state judging portion 52d. When the detecting device 40 is detected to be the state that the detecting device 40 cannot detect obstacle, the control device 50, for example, controls to stop the traveling of the electric wheel chair 1 or to give an alarm to the occupant of the electric wheel chair 1. According to the structure, the occupant of the electric wheel chair 1 can remove the obstacle to eliminate the shielded state to recover the detecting device 40 to be in the state that the detecting device 40 can detect the obstacles. Thus, the state, that the possible collision of the electric wheel chair 1 with the obstacle can be reduced, can be maintained. In addition, when the electric wheel chair 1 and an obstacle pass by each other, a concern of the occupant of the electric wheel chair 1 about a possible collision with the obstacle can be relieved.

The control device 50 further includes the predetermined detecting distance calculating portion 52a which calculates the predetermined detecting distance Ds based on the input information. For example, when the electric wheel chair 1 is traveling with a low speed in a place crowded with many obstacles, such as pedestrians, the detecting portion 41 of the detecting device 40 is temporarily shielded by the pedestrian or the like and frequently falls in the state that the temporal shielded ratio Rs reaches equal to or more than the shielded ratio judgement value "Ths". Under such state, even when the obstacle is in the first area A1 or in the second area A2, where the obstacle can be properly detectable, under the situation that the pedestrian are approaching and passing by the electric wheel chair 1, the control device 50 may misjudge that the detecting device is in a shielded state. To avoid such misjudgment, according to the embodiment, the control device 50 controls to relatively lower the value of the shielded ratio Rs by lessening the predetermined detecting distance Ds by calculation by the predetermined detecting distance calculating portion 52a, for example, when the electric wheel chair 1 is traveling with a low speed. Therefore, a temporal rising of the shielded ratio Rs to equal to or more than the shielded ratio judgement value "Ths" can be suppressed. Thus, the misjudgment that the detecting device 40 is in a shielded state due to a temporarily shielded state of the detecting device 40 by the obstacle can be suppressed. As a result, a safe and secure traveling control can be performed.

Further, the control device 50 further includes the shielded ratio judgement value calculating portion 52c which calculates the shielded ratio judgement value "Ths" based on the input information. For example, when the electric wheel chair 1 is traveling with a low speed in a place crowded with many obstacles, such as pedestrians, the detecting portion 41 of the detecting device 40 is temporarily shielded by the pedestrians or the like, as explained above. Under such situation, the control device 50 may misjudge that the detecting device is in a shielded state. To avoid such misjudgment, according to the embodiment, for example, when the electric wheel chair 1 is traveling with a low speed, the control device 50 controls to relatively increase the shielded ratio judgement value "Ths" by the calculation by the shielded ratio judgement value calculating portion 52c. Thus, the frequency that the shielded ratio Rs temporarily increases can be suppressed. Accordingly, the misjudgment that the detecting device 40 is in a shielded state due to a temporarily shielded state of the detecting device 40 by the obstacle can be suppressed. As a result, a safe and secure traveling control can be performed.

Next, as a first modified embodiment of the above embodiment of the invention, a modified embodiment of the collision risk reduction control executed by the control device 50 will be explained. According to the embodiment explained above, the driving amount restricting maintaining portion 51h maintains the driving amount of the driving device 20 to the restricting driving amount for a predetermined moving time Tm after a time when the obstacle is detected to have moved out of the first area A1 by the moving out of area detecting portion 51g. Alternatively, according to the modified embodiment, the driving amount restricting maintaining portion 51h maintains the driving amount of the driving device 20 to the restricting driving amount for a predetermined moving distance Dm, after a time when the obstacle is detected to have been out of the first area A1 by the moving out of area detecting portion 51g. The predetermined moving distance Dm is a predicted distance that the obstacle once detected in the first area A1 has relatively moved out of the first area A1 may pass by the electric wheel chair 1 from the time that the obstacle has moved out of the first area A1.

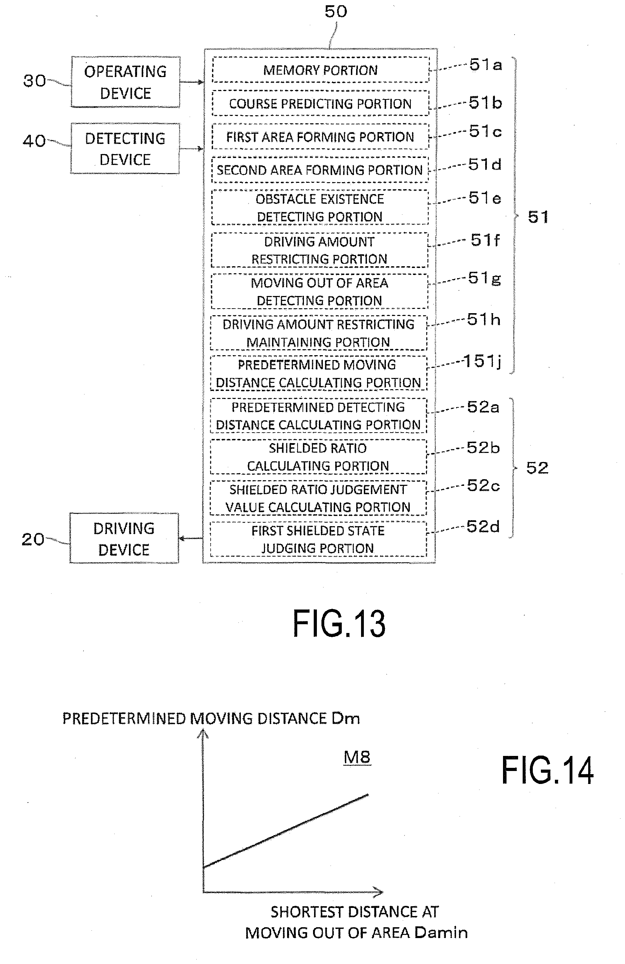

Further, the collision risk reduction control portion 51 of the control device 50 according to the first modified embodiment includes a predetermined moving distance calculating portion 151j shown in Fig. 13, instead of the predetermined moving distance calculating portion 51j of the embodiment as explained above. The predetermined moving distance calculating portion 151j calculates the predetermined moving distance Dm from the shortest distance "Damin" at the time of moving out of the area, based on the eighth map M8 indicated in Fig. 14. The eighth map M8 indicates a relationship between the shortest distance "Damin" at the time of moving out of the area and the predetermined moving distance "Dm". The relationship between the shortest distance "Damin" at the time of moving out of the area and the predetermined moving distance "Dm" is set such that the smaller the shortest distance "Damin" at the time of moving out of the area, the smaller the predetermined moving distance "Dm" becomes. As explained, the driving amount restricting maintaining portion 51h maintains the driving amount of the driving device 20 to the restricting driving amount for the predetermined moving time Tm that the electric wheel chair 1 moves or for the predetermined moving distance Dm that the electric wheel chair 1 moves, after a time when the obstacle is detected to have moved out of the first area A1 by the moving out of area detecting portion 51g.

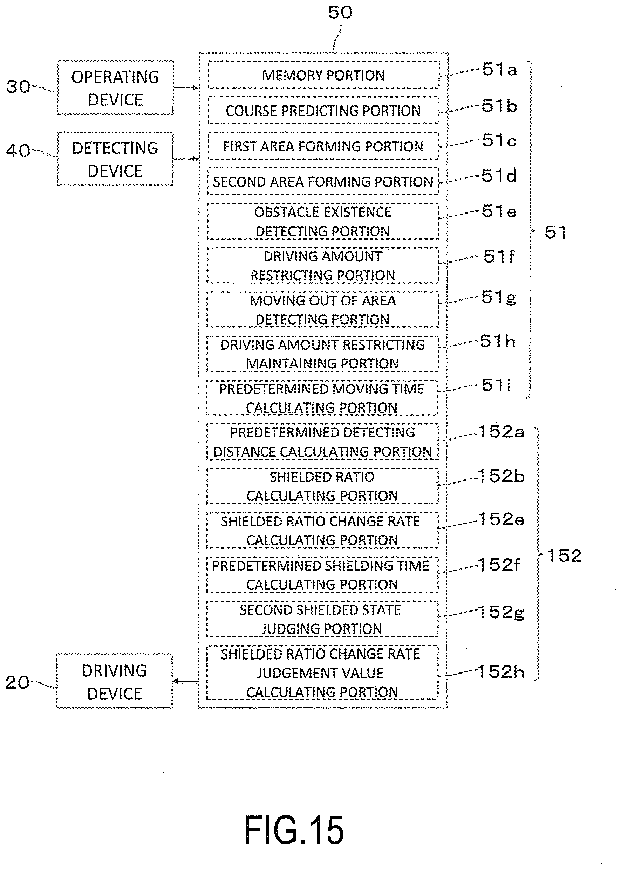

Next, as a second modified embodiment of the embodiment as explained above, a modified embodiment of the detecting portion shielded state detecting control executed by the control device 50 will be explained. The detecting portion shielded state detecting control by the control device 50 according to the second modified embodiment is executed by the detecting portion shielded state detecting portion 152 provided in the control device 50 shown in Fig.15. The detecting portion shielded state detecting portion 152 is formed by a predetermined detecting distance calculating portion 152a, a shielded ratio calculating portion 152b, a shielded ratio change rate calculating portion 152e, a predetermined shielding time calculating portion 152f, a second shielded state judging portion 152g and a shielded ratio change rate judgement value calculating portion 152h.

The predetermined detecting distance calculating portion 152a calculates the predetermined detecting distance Ds as similar to the predetermined detecting distance calculating portion 52a of the embodiment. The shielded ratio calculating portion 152b calculates the shielded ratio Rs as similar to the shielded ratio calculating portion 52b of the embodiment.

The shielded ratio change rate calculating portion 152e calculates the shielded ratio change rate "Rsh" which corresponds to the change rate of the shielded ratio Rs. The shielded ratio change rate calculating portion 152e calculates the shielded ratio change rate "Rsh" which corresponds to the change rate of the shielded ratio Rs based on the time series data of the shielded ratio Rs. The time series data of the shielded ratio Rs is a data of time change of the shielded ratio Rs calculated by the shielded ratio calculating portion 152b. The time series data of the shielded ratio Rs is formed by being memorized in the memory portion 51a every first predetermined time. The shielded ratio change rate "Rsh" is calculated by the current shielded ratio Rsn which is the latest shielded ratio memorized in the time series data of the memory portion 51a and the previous shielded ratio Rsb which is the previously memorized shielded ratio a predetermined shielding time Ts passed from the memorized time of the current shielded ratio Rsn. In more detail, the shielded ratio change rate Rsh is a change rate of the current shielded ratio Rsn relative to the previous shielded ratio Rsb. (shielded ratio change rate Rsh = current shielded ratio Rsn / previous shielded ratio Rsb). The predetermined shielding time Ts is a time calculated by a predetermined shielding time calculating portion 152f.

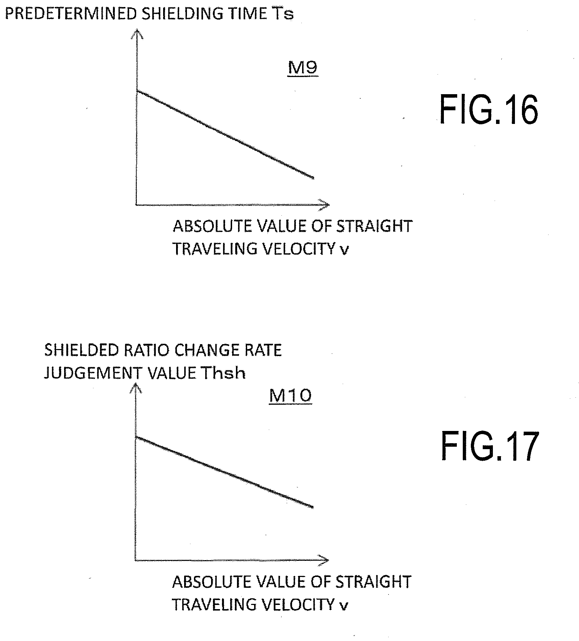

The predetermined shielding time calculating portion 152f calculates the predetermined shielding time Ts based on the input information from the operating device 30. The predetermined shielding time Ts is calculated from the straight traveling velocity "v" converted according to the input information based on the ninth map M9 indicated in Fig. 16. The ninth map M9 indicates a relationship between the magnitude of the straight traveling velocity "v" (absolute value "| v |" of the straight traveling velocity) and the predetermined shielding time Ts. The relationship between the magnitude of the straight traveling velocity "v" and the predetermined shielding time Ts is set such that the smaller the magnitude of the straight traveling velocity "v", the larger the predetermined shielding time Ts becomes.

The second shielded state judging portion 152g judges that the detecting device 40 is in a shielded state that the detecting device 40 cannot detect the obstacle, when the shielded ratio change rate "Rsh" calculated by the shielded ratio change rate calculating portion 152e is equal to or less than the shielded ratio change rate judgement value "Thsh." The shielded ratio change rate judgement value "Thsh" is calculated by the shielded ratio change rate judgement value calculating portion 152h.

The shielded ratio change rate judgement value calculating portion 152h calculates the shielded ratio change rate judgement value "Thsh" based on the input information from the operating device 30. The shielded ratio change rate judgement value calculating portion 152h is calculated from the magnitude of the straight traveling velocity "v" based on the tenth map M10 indicated in Fig. 17. The tenth map M10 indicates a relationship between the magnitude of the straight traveling velocity "v" (absolute value "| v |" of the straight traveling velocity) and the shielded ratio change rate judgement value "Thsh". The relationship between the magnitude of the straight traveling velocity "v" and the shielded ratio change rate judgement value "Thsh" is set such that the smaller the magnitude of the straight traveling velocity "v", the larger the shielded ratio change rate judgement value "Thsh" becomes.

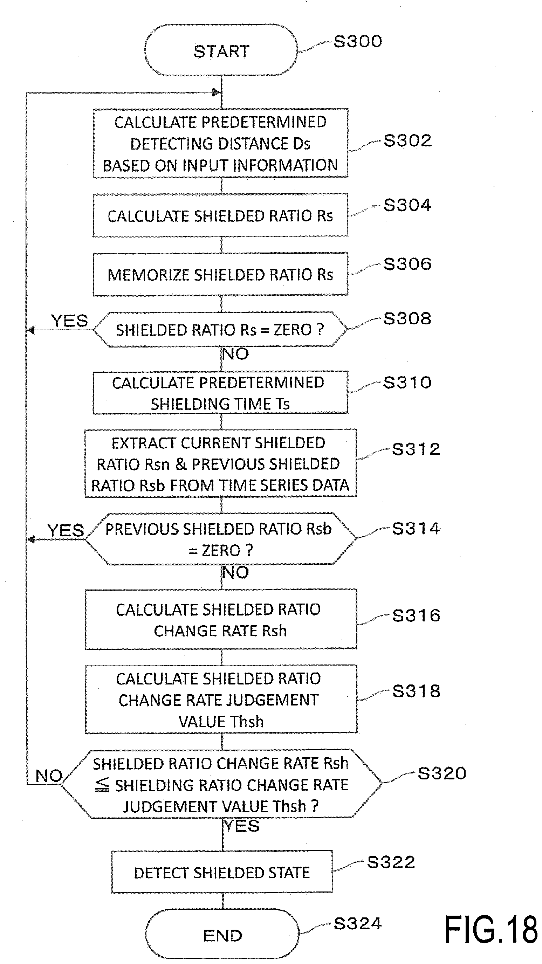

The detecting portion shielded state detecting control executed by the control device 50 according to the second modified embodiment will be explained with reference to the flowchart illustrated in Fig. 18.

The control device 50 calculates the predetermined detecting distance Ds based on the input information from the operating device 30 (Step S302; predetermined detecting distance calculating portion 152a) and calculates the shielded ratio Rs (Step S304; shielded state calculating portion 152b). Then, the control device 50 memorizes the shielded ratio Rs calculated by the shielded state calculating portion 152b in the memory portion 51a to form a time series data(Step S306).

The control device 50 judges at the step S308 whether the calculated shielded ratio Rs is zero (0) or not. When a object to be detected is not detected at the detecting portion 41 of the detecting device 40, the shielded ratio Rs becomes zero and accordingly, the control device 50 judges as "YES" at the step S308 and returns the program to the step S302. On the other hand, if at least a portion of the detecting portion 41 of the detecting device 40 is shielded by the object to be detected, the shielded ratio is not zero and accordingly, the control device 50 judges as "NO" at the step S308 and advances the program to the step S310.

The control device 50 calculates the predetermined shielding time Ts. (Step S310; predetermined shielding time calculating portion 152f). The control device 50 extracts the current shielded ratio "Rsn" and the previous shielded ratio "Rsb" from the time series data at the step S312. If the previous shielded ratio Rsb cannot be extracted due to the insufficient number of the time series data or the like, the control device 50 sets the previous shielded ratio Rsb as zero (0). The control device 50 judges whether the previous shielded ratio Rsb is indicated as zero or not.. If the previous shielded ratio Rsb is zero due to some reason, such as for example, due to a case that the detecting portion 41 is not shielded, or the case that the number of the time series data is not enough number, the control device 50 judges as "YES" at the step S314 and returns the program to the step S302. On the other hand, if the previous shielded ratio Rsb is not zero, the control device 50 judges as "NO" at the step S314 and advances the program to the step S316.

The control device 50 calculates the shielded ratio change rate "Rsh" (Step S316; shielded ratio change rate calculating portion 152e) and calculates the shielded ratio change rate judgement value "Thsh" based on the input information from the operating device 30 (Step S318; shielded ratio change rate judgement value calculating portion 152h). Then, the control device 50 judges whether the shielded ratio change rate "Rsh" is equal to or less than the shielded ratio change rate judgement value "Thsh" or not. (Step S320; second shielded state judging portion 152g). If the detecting portion 41 of the detecting device 40 is continued to be covered or shielded by the object to be detected, such as, a cloth or the like, the shielded ratio change rate "Rsh" is relatively small and accordingly, the shielded ratio change rate "Rsh" indicates a value equal to or less than the shielded ratio change rate judgement value "Thsh". Under such situation, the control device 50 judges as "YES" at the step S320 and detects the shielded state of the detecting device 40 at the step S322. On the other hand, if the detecting portion 41 of the detecting device 40 is temporarily shielded due to a getting on or off operation by the occupant of the electric wheel chair 1, or an approach of a pedestrian to the electric wheel chair 1, the shielded ratio change rate Rsh becomes relatively large and accordingly, the shielded ratio change rate Rsh becomes larger than the shielded ratio change rate judgement value "Thsh". Under such situation, the control device 50 judges as "NO" at the step S320 and returns the program to the step S302.

According to the second modified embodiment, the control device 50 further includes a shielded ratio calculating portion 152b which calculates the ratio of the angle occupied by a shielding object which is an object to be detected by the detecting device 40 within the predetermined detecting distance Ds from the detecting portion 41 of the detecting device 40, relative to the detectable angular range within which the detecting device 40 can detect the object to be detected, as a shielded ratio Rs that is the ratio that a shielding object shields the detecting portion 41 of the detecting device 40, a shielded ratio change rate calculating portion 152e which calculates the shielded ratio change rate Rsh corresponding to the change rate of the shielded ratio Rs and the second shielded state judging portion 152g which judges that the detecting device 40 is in a shielded state in which the detecting portion 40 cannot detect the obstacle, when the shielded ratio change rate Rsh calculated by the shielded ratio change rate calculating portion 152e is equal to or less than the shielded ratio change rate judgement value "Thsh".

For example, when the electric wheel chair 1 is traveling with a low speed in a place crowded with many obstacles, such as pedestrians, the detecting portion 41 of the detecting device 40 is temporarily shielded by the pedestrian(s) or the like and the control device 50 may misjudge that the detecting device 40 is in a shielded state. In order to avoid such misjudgment, the control device 50 according to the second modified embodiment judges whether the detecting device 40 is in the shielded state or not, considering the shielded ratio change rate Rsh calculated by the shielded ratio change rate calculating portion 152e. Accordingly, the misjudgment due to the temporal shielding of the detecting portion 41 of the detecting device 40 by the obstacle can be suppressed.

According to the embodiment explained above, one example of the movable body is explained, but the invention is not limited to this example. For example, in the above embodiment, the movable body is explained as an electric wheel chair 1, but instead of the electric wheel chair, a boarding type movable body, such as, for example, a small size (compact) vehicle or a movable robot can be applied. Further, the operating device 30 is explained as a joystick type device according to the above embodiment, but instead of the joystick type, the operating device 30 may be formed by an acceleration which instructs the traveling speed and a steering wheel which instructs the turning direction of the electric wheel chair 1.

Further, as the detecting device 40 according to the embodiment, the three dimensional measuring area sensor which detects a three-dimensional position information on the object to be detected. However, a two-dimensional measuring area sensor which detects two-dimensional position information on the detecting object may be used, instead. Further, according to the embodiment explained above, the electric wheel chair 1 includes one detecting device 40. However, a plurality of detecting devices 40 may be provided. According to the plurality of detecting devices 40, the detectable angular range "Ah" within which the detecting device 40 can detect the object to be detected can be widened, compared to the structure of one detecting device 40.

According to the embodiment, the first area A1 and the second area A2 are formed on the polar coordinates C in the same plane. However, the first area A1 and the second area A2 may be formed sterically. In such case, instead of forming on the polar coordinates C, the first area A1 and the second area A2 may be formed on the spherical coordinates centering on the electric wheel chair 1. In such case, the height of the first area A1 may be set differently from the height of the second area A2 within the object to be detected detectable range of the detecting device 40. Further, according to the embodiment, the point of origin CO of the polar coordinates C is set to the position of the detecting portion 41 of the detecting device 40. However, the point of origin CO of the polar coordinates C may be set to, for example, the center of gravity of the electric wheel chair 1. In such case, the coordinates data which is the information on the object to be detected from the detecting device 40 is corrected and projected on the polar coordinates C.

Further, according to the embodiment, the second area A2 is formed at the position relatively close to the electric wheel chair 1. However, the second area A2 may be formed to be larger than the first area A1 in a traveling direction of the electric wheel chair 1. In such case, when an obstacle which traveling speed is fast approaches the electric wheel chair 1, the obstacle can be detected in the second area A2 even the first area A1 is formed to be relatively small due to the slower traveling speed of the electric wheel chair 1. Further, according to the embodiment, the control device 50 forms the second area A2 by the second area forming portion 51d. However, the second area A2 may be eliminated.

Further, according to the embodiment, the maximum speed of the traveling velocity "v" of the electric wheel chair 1 restricted by the driving amount restricting portion 51f changes depending on the shortest distance Dmin, when an obstacle is detected in the first area A1. However, such restriction of the maximum speed can be changed depending on the relative speed between the electric wheel chair 1 and the entering obstacle or the density of the obstacle in the grids G (density of group of points PG). When the obstacle is detected in the first area A1, the driving amount restricting portion 51f may restrict the maximum speed of the straight traveling velocity "v" to a fixed speed regardless of the length of the shortest distance Dmin.

Still further, the maximum speed of the straight traveling velocity "v" is restricted by the driving mount restricting portion 51f by setting the driving amount of the driving device 20 to the restricting driving amount. However, the value of the straight traveling velocity "v" may be decreased with a predetermined ratio across the board. Further, the time change (acceleration) of the straight traveling velocity "v" can be restricted.

Further, according to the embodiment, the maximum speed of the straight traveling velocity "v" restricted by the driving amount restricting portion 51f is set to a constant speed when the obstacle is detected in the second area A2. However, such speed may be changed depending on the shortest distance Dmin, relative speed between the electric wheel chair 1 and the obstacle or the density of the obstacle in the grids G (density of group of points PG).

Further, according to the embodiment, the predetermined moving time calculating portion 51i calculates the predetermined moving time Tm from the shortest distance Damin at the time of moving out of area. However, the predetermined moving time Tm may be calculated based on the relative speed between the electric wheel chair 1 and the obstacle or the density of the obstacle in the grids G (density of group of points PG).

Further, according to the embodiment, the predetermined moving time Tm is calculated by the predetermined moving time calculating portion 51i. However, the predetermined moving time Tm is set to a fixed time in advance. In such case, the predetermined moving time Tm may be set in advance to a presumed time (for example, 10 seconds) presumed to be moved from the time when the obstacle once detected in the first area A1, moved relatively out of the first area A1 to the time when the obstacle is presumed to be passing by the electric wheel chair 1.

Further, according to the first modified embodiment, the predetermined moving distance Dm is calculated by the predetermined moving distance calculating portion 151j. However, the predetermined moving distance Dm may be set in advance to a fixed distance. In such case,
the predetermined moving distance Dm may be set in advance to a presumed distance (for example, five (5) meters) presumed to be moved from the time when the obstacle once detected in the first area A1, moved relatively to be out of the first area A1 to the time when the obstacle passes by the electric wheel chair 1.

Further, according to the embodiment explained above, the detecting portion shielded state detecting control is executed while the electric wheel chair 1 is turned ON. However, such control may be executed only while the electric wheel chair 1 is in traveling operation control.

Further, according to the embodiment, the shielded ratio calculating portion 52b calculates the shielded ratio Rs by using the grids G. However, the shielded ratio Rs may be calculated directly by the information on the detecting object (coordinates data of the group of points PG). In more detail, an angular range in a circumferential direction where the object to be detected exists within a predetermined detecting distance Ds is calculated by the coordinates data of the group of points PG. The shielded ratio Rs is calculated as a ratio of this calculated angular range relative to the detectable angular range Ah in which the detecting device 40 can detect.

Further, according to the second modified embodiment, the predetermined shielding time Ts is calculated by the predetermined shielding time calculating portion 152f. However, the predetermined shielding time Ts may be set in advance to a fixed time (for example, five seconds). Further, according to the second modified embodiment, the shielded ratio change rate judgement value Thsh is calculated by the shielded ratio change rate judgement value calculating portion 152h. However, the shielded ratio change rate judgement value Thsh may be set in advance to a fixed value (for example, 10 %).

Further, according to the embodiment, the second area A2 is formed by the second area forming portion 51d to be a predetermined magnitude along in an advancing direction of the predicted course Wy. However, the second area A2 may be set in advance to be fixed in a predetermined direction (for example, in a frontward direction of the electric wheel chair 1) with respect to the movable body (electric wheel chair 1). Further, when the movable body (electric wheel chair 1) is provided with a plurality of detecting devices 40, the first area A1 and the second area A2 are respectively formed based on the different detecting devices 40.

Further, according to the embodiment, when an obstacle is detected in the second area A2, the driving amount restricting portion 51f calculates the second maximum straight traveling velocity "vx2" based on the fourth map M4. However, the second maximum straight traveling velocity "vx2" may be set to a fixed value set in advance.

Further, according to the embodiment, the driving amount restricting portion 51f restricts the driving amount of the driving device 20 to a restricting driving amount while the obstacle is being detected in at least either one of the first and the second areas A1 and A2 by the obstacle existence detecting portion 51e. However, the driving amount restriction may be released when the desired straight traveling velocity "xjs" inputted by the operating device 30 is less than the first maximum straight traveling velocity "vx1" and the second maximum straight traveling velocity "vx2".

Further, according to the embodiment above, the driving amount of the driving device 20 is maintained to the restricting driving amount for the predetermined moving time Tm which is the time that the electric wheel chair 1 moves or the predetermined moving distance Dm which is the distance that the electric wheel chair 1 travels, after the detection by the obstacle existence detecting portion 51e changes from the obstacle being detected to the obstacle being not detected. This driving restricting method may be changed such that the restricting driving amount may be stepwise or gradually changed after the detection result change from the obstacle being detected to the obstacle being not detected.

Further, according to the embodiment, the moving out of area detecting portion 51g detects that the obstacle detected in the first area A1 has relatively moved out of the first area A1 based on the detecting result of the obstacle to be detected by the obstacle existence detecting portion 51e. However, the moving out of area detecting portion 51g detects that the obstacle to be detected in the second area A2 has relatively moved out of the second area A2 based on the detecting result of the obstacle detected by the obstacle existence detecting portion 51e.

Further, in such case, the driving amount restricting maintaining portion 51h maintains the driving amount of the driving device 20 to the restricting driving amount for the time that the electric wheel chair 1 moves for the predetermined moving time Tm or for the time that the electric wheel chair 1 moves the predetermined moving distance Dm, after the detection by the moving out of area detecting portion 51 that the obstacle has moved out of the second area A2. In other words, the driving amount restricting maintaining portion 51 h maintains the driving amount of the driving device 20 for the predetermined moving time Tm that the electric wheel chair 1 moves or for the predetermined moving distance Dm that the electric wheel chair 1 moves after the detecting result by the obstacle existence detecting portion 51e changes from the obstacle being detected in the second area A2 to the obstacle being not detected in the second area A2. The control device 50 further includes the driving amount restricting maintaining portion 51h which maintains the driving amount of the driving device 20 to the restricting driving amount, while the electric wheel chair 1 travels for the predetermined moving time Tm or travels the predetermined moving distance Dm after a change of detecting result by the obstacle existence detecting portion 51e from a result that the obstacle is detected to a result that the obstacle is not detected.

It is noted that the description explained above includes the following technical concepts.

### (appendix item 1)

The movable body which travels, driven by a driving device according to an input to an operating device by an occupant of the movable body, wherein the movable body includes a detecting device which detects an object to be detected and a control device which controls the movable body to travel by controlling a driving amount of the driving device based on an input information which is an information inputted to the operating device. The control device includes a course predicting portion which predicts a course of the movable body based on the input information, a first area forming portion which forms a first area extending along in a traveling direction of a predicted course which is a course of the movable body predicted by the course predicting portion, an obstacle existence detecting portion which detects whether or not an obstacle, which is the object to be detected, exists in the first area formed by the first area forming portion located within a predetermined distance from detecting portion of the detecting device based on the information on the obstacle, which is the object to be detected, detected from the detecting device, a driving amount restricting portion which restricts the driving amount of the driving device to a restricting driving amount, while the obstacle is detected to be existing in the first area by the obstacle existence detecting portion, a moving out of area detecting portion which detects that the obstacle detected to be existing in the first area has moved out of the first area based on the information on the obstacle detected by the obstacle existence detecting portion and a driving amount restricting maintaining portion which maintains the driving amount to the restricting driving amount after the detection that the obstacle has moved out of the first area detected by the moving out of area detecting portion.

### (Appendix item 2)

The movable body which travels, driven by a driving device according to an input to an operating device by an occupant of the movable body, wherein the movable body includes a detecting device which detects an object to be detected and a control device which controls the movable body to travel by controlling a driving amount of the driving device based on an input information which is an information inputted to the operating device. The control device includes an area forming portion (corresponding to the first area forming portion 51c and the second area forming portion 51d according to the embodiment explained above) which forms at least one of a first area extending along in a traveling direction of a predicted course of the movable body predicted based on the input information and a second area as a surrounding area located within a predetermined distance from the movable body, an obstacle existence detecting portion (corresponding to the obstacle existence detecting portion 51e according to the embodiment explained above) which detects whether or not an obstacle exists in the area formed by the area forming portion based on the detecting result from the detecting device and a driving amount restricting portion which restricts the driving amount of the driving device to a restricting driving amount, while the obstacle is detected to be existing. The control device maintains the driving amount of the driving device to the restricting driving amount, while the movable body travels for a predetermined moving time or travels a predetermined moving distance after a change of detecting result by the obstacle existence detecting portion from a result that the obstacle is detected to a result that the obstacle is not detected.

### [Brief Explanation of Symbols and Signs]

1; electric wheel chair, 10; wheel chair main body, 20; driving device, 30; operating device, 40; detecting device, 41; detecting portion, 50; control device, 51; collision risk reduction control portion, 51b; course predicting portion, 51c; first area forming portion, 51d; second area forming portion, 51e; obstacle existence detecting portion, 51f; driving amount restricting portion, 51g; moving out of area detecting portion, 51h; driving amount restricting maintaining portion, 52; detecting portion shielded state detecting portion, 52b; shielded ratio calculating portion, 52d; first shielded state judging portion, 152e; shielded ratio change rate calculating portion, 152g; second shielded state judging portion, A1; first area, A2; second area, Ah; detecting angular range, C; polar coordinates, Dm; predetermined moving distance, Ds; predetermined detecting distance, Rs; shielded ratio, Rsh; shielded ratio change rate, Ths; shielded ratio judgement value, Thsh; shielded ratio change rate judgement value, Tm; predetermined moving time, Wy; predicted course.

## Claims

1. A movable body configured to travel, driven by a driving device (20) according to an input to an operating device (30) by an occupant of the movable body, wherein the movable body includes:
a detecting device (40) configured to detect an object to be detected; and
a control device (50) configured to control the movable body to travel by controlling a driving amount of the driving device (20) based on an input information which is an information inputted to the operating device (30), wherein the control device (50) includes:
a first area forming portion (51c) configured to form a first area (A1) extending along a predicted course (Wy) of the movable body predicted based on the input information so that the shape of the first area (A1) is variable depending on the change of the predicted course (Wy) due to the change of the input information;
a second area forming portion (51d) configured to form a second area (A2) which has a predetermined size along in the traveling direction,
an obstacle existence detecting portion (51e) configured to detect whether or not an obstacle, which is the object to be detected, exists in the first area (A1) or the second area (A2) as a surrounding area located within a predetermined distance from the movable body; and
a driving amount restricting portion (51f) configured to restrict the driving amount of the driving device (20) to a restricting driving amount, while the obstacle is detected to be existing in at least one of the first area (A1) and the second area (A2) by the obstacle existence detecting portion (51e), wherein by restricting a maximum driving amount of the driving device (20) to the restricting driving amount, the maximum speed of the straight traveling velocity is restricted;
wherein the driving amount restricting portion (51f) is configured to restrict the maximum speed of the straight traveling velocity to a first maximum straight traveling velocity, while the obstacle is being detected in the first area (A1), and to restrict the maximum speed of the straight traveling velocity to a second maximum straight traveling velocity, while the obstacle is being detected in the second area (A2),
wherein, if the obstacle is detected in an overlapping area (A3) which overlaps with the first area and the second area, the maximum speed of the straight traveling velocity is restricted to the smaller one of the first maximum straight velocity and the second maximum straight traveling velocity, whichever the smaller one;
wherein the first area is formed to include grids (G) where the predicted course (Wy) is positioned on polar coordinates (C) having a point of origin (C0) corresponding to the position of a detecting portion (41) of the detecting device (40); and
wherein the second area (A2) being formed to be a sector shape having the size set in advance with the point of origin (CO) on the polar coordinates (C) as the center of the sector shape.

2. The movable body according to claim 1, wherein the control device (50) further includes:
a driving amount restricting maintaining portion (51h) configured to maintain the driving amount of the driving device (20) to the restricting driving amount, while the movable body travels for a predetermined moving time (Tm) or travels a predetermined moving distance (Dm) after a change of detecting result by the obstacle existence detecting portion (51e) from a result that the obstacle is detected to a result that the obstacle is not detected.

3. The movable body according to claim 1 or 2, wherein,
a width of the second area (A2) is set to be larger than a width of the movable body.

4. The movable body according to any one of claims 1 through 3, wherein the control device (50) further includes:
a shielded ratio calculating portion (52b) configured to calculate a ratio of an angle occupied by a shielding object, which is the object to be detected, located within a predetermined detecting distance (Ds) from a detecting portion (41) of the detecting device (40) and detected by the detecting device (40), relative to a detectable angular range (Ah) in which the detecting device (40) can detect the object to be detected, as a shielded ratio (Rs) that is a ratio of an area that the shielding object shields the detecting portion (41) of the detecting device (40) relative to an area which is detectable by the detecting device (40);
a shielded ratio judgement value calculating portion (52c) which is configured to calculate a shielded ratio judgement value (Ths) based on the input information; and
a first shielded state judging portion (52d) configured to judge that the detecting device (40) is in a shielded state that the obstacle cannot be detected, when the shielded ratio (Rs) calculated by the shielded ratio calculating portion (52b) is equal to or more than the shielded ratio judgement value (Ths).

5. The movable body according to any one of claims 1 through 3, wherein the control device (50) further includes:
a shielded ratio calculating portion (52b) configured to calculate a ratio of an angle occupied by a shielding object, which is the object to be detected, located within a predetermined detecting distance (Ds) from a detecting portion (41) of the detecting device (40) and detected by the detecting device (40), relative to a detectable angular range (Ah) in which the detecting device (40) can detect the object to be detected, as a shielded ratio (Rs) that is a ratio of an area that the shielding object shields the detecting portion (41) of the detecting device (40) relative to an area which is detectable by the detecting device (40);
a shielded ratio judgement value calculating portion (52c) which is configured to calculate a shielded ratio judgement value (Ths) based on the input information; and
a shielded ratio change rate calculating portion (152e) configured to calculate a shielded ratio change rate (Rsh) which is a change rate of the shielded ratio (Rs); and
a second shielded state judging portion (152g) configured to judge that the detecting device (40) is in a shielded state that the obstacle cannot be detected, when the shielded ratio change rate (Rsh) calculated by the shielded ratio change rate calculating portion (152e) is less than a shielded ratio change rate judgement value (Thsh).

6. The movable body according to claim 4 or 5, wherein the control device (50) further includes:
a predetermined detecting distance calculating portion (52a) configured to calculate the predetermined detecting distance (Ds) based on the input information.

## Patentansprüche

1. Beweglicher Körper, der zum Fahren konfiguriert ist, angetrieben durch eine Antriebsvorrichtung (20) gemäß einer Eingabe in eine Bedienungsvorrichtung (30) durch einen Insassen des beweglichen Körpers, wobei der bewegliche Körper beinhaltet:
eine Erfassungsvorrichtung (40), die dazu konfiguriert ist, ein zu erfassendes Objekt zu erfassen, und
eine Steuervorrichtung (50), die dazu konfiguriert ist, den beweglichen Körper durch Steuern einer Antriebsmenge der Antriebsvorrichtung (20) basierend auf einer Eingabeinformation, die eine Information ist, die in die Bedienungsvorrichtung (30) eingegeben wurde, zu steuern, wobei die Steuervorrichtung (50) umfasst:
eine erste Bereichsbildungssektion (51c), die dazu konfiguriert ist, einen ersten Bereich (A1) zu bilden, der sich entlang eines vorhergesagten Verlaufs (Wy) des beweglichen Körpers erstreckt, der basierend auf den Eingabeinformationen vorhergesagt wurde, so dass die Form des ersten Bereichs (A1) in Abhängigkeit von der Änderung des vorhergesagten Verlaufs (Wy) aufgrund der Änderung der Eingabeinformationen variabel ist,
eine zweite Bereichsbildungssektion (51d), die dazu konfiguriert ist, einen zweiten Bereich (A2) zu bilden, der eine vorbestimmte Größe entlang der Fahrtrichtung aufweist,
eine Hindernisexistenzerfassungssektion (51e), die dazu konfiguriert ist, zu erfassen, ob ein Hindernis, welches das zu erfassende Objekt ist, in dem ersten Bereich (A1) oder dem zweiten Bereich (A2) als einer Umgebung, die sich in einem vorbestimmten Abstand von dem beweglichen Körper befindet, existiert oder nicht, und
eine Antriebsmengenbegrenzungssektion (51f), die konfiguriert ist, die Antriebsmenge der Antriebsvorrichtung (20) auf eine einschränkende Antriebsmenge zu begrenzen, während das Hindernis durch die Hindernisexistenzerfassungssektion (51e) in mindestens einem von dem ersten Bereich (A1) und dem zweiten Bereich (A2) als existent erfasst wird, wobei durch Begrenzen einer maximalen Antriebsmenge der Antriebsvorrichtung (20) auf die begrenzende Antriebsmenge die maximale Geschwindigkeit der geraden Fahrgeschwindigkeit begrenzt wird,
wobei die Antriebsmengenbegrenzungssektion (51f) dazu konfiguriert ist, die maximale Geschwindigkeit der geraden Fahrgeschwindigkeit auf eine erste maximale gerade Fahrgeschwindigkeit zu begrenzen, während das Hindernis in dem ersten Bereich (A1) erfasst wird, und die maximale Geschwindigkeit der geraden Fahrgeschwindigkeit auf eine zweite maximale gerade Fahrgeschwindigkeit zu begrenzen, während das Hindernis in dem zweiten Bereich (A2) erfasst wird,
wobei, wenn das Hindernis in einem überlappenden Bereich (A3) erfasst wird, der sich mit dem ersten Bereich und dem zweiten Bereich überlappt, die maximale Geschwindigkeit der geraden Fahrgeschwindigkeit auf die kleinere der ersten maximalen geraden Geschwindigkeit und der zweiten maximalen geraden Fahrgeschwindigkeit begrenzt wird, je nachdem, welche die kleinere ist,
wobei der erste Bereich so ausgebildet ist, dass er Gitter (G) einschließt, wobei der vorhergesagte Verlauf (Wy) auf Polarkoordinaten (C) mit einem Ursprungspunkt (CO) positioniert ist, welcher der Position einer Erfassungssektion (41) der Erfassungsvorrichtung (40) entspricht, und
wobei der zweite Bereich (A2) gebildet wird, um eine Sektorform zu sein, welche die Größe aufweist, die im Voraus mit dem Ursprungspunkt (CO) auf den Polarkoordinaten (C) als Mittelpunkt der Sektorform eingestellt wurde.

2. Beweglicher Körper nach Anspruch 1, wobei die Steuervorrichtung (50) ferner umfasst: eine Antriebsmengenbegrenzungs-Haltesektion (51h), die dazu konfiguriert ist, die Antriebsmenge der Antriebsvorrichtung (20) auf der begrenzenden Antriebsmenge zu halten, während der bewegliche Körper für eine vorbestimmte Bewegungszeit (Tm) fährt oder eine vorbestimmte Bewegungsdistanz (Dm) fährt nachdem eine Änderung des Erfassungsergebnisses von einem Ergebnis, dass das Hindernis erfasst ist, zu einem Ergebnis, dass das Hindernis nicht erfasst ist, durch die Hindernisexistenzerfassungssektion (51e) vorgenommen wurde.

3. Beweglicher Körper nach Anspruch 1 oder 2, wobei,
eine Breite des zweiten Bereichs (A2) so eingestellt ist, dass sie größer als die Breite des beweglichen Körpers ist.

4. Beweglicher Körper nach einem der Ansprüche 1 bis 3, wobei die Steuervorrichtung (50) ferner umfasst:
eine Abschirmungsverhältnis-Berechnungssektion (52b), die dazu konfiguriert ist, ein Verhältnis eines Winkels zu berechnen, der von einem abschirmenden Objekt eingenommen wird, das das zu erfassende Objekt ist, das sich innerhalb eines vorbestimmten Erfassungsabstandes (Ds) von einer Erfassungssektion (41) der Erfassungsvorrichtung (40) befindet und von der Erfassungsvorrichtung (40) erfasst ist, relativ zu einem erfassbaren Winkelbereich (Ah), in dem die Erfassungsvorrichtung (40) das zu erfassende Objekt erfassen kann, als ein Abschirmungsverhältnis (Rs), das ein Verhältnis eines Bereichs ist, in dem das abschirmende Objekt die Erfassungssektion (41) der Erfassungsvorrichtung (40) abschirmt, relativ zu einem Bereich, der durch die Erfassungsvorrichtung (40) erfassbar ist,
eine Abschirmungsverhältnis-Beurteilungswert-Berechnungssektion (52c), die dazu konfiguriert ist, einen Abschirmungsverhältnis-Beurteilungswert (Ths) basierend auf den Eingabeinformationen zu berechnen, und
eine erste Abschirmungszustands-Beurteilungssektion (52d), die dazu konfiguriert ist, zu beurteilen, dass sich die Erfassungsvorrichtung (40) in einem Abschirmungszustand befindet, in dem das Hindernis nicht erfasst werden kann, wenn das durch die Abschirmungsverhältnis-Berechnungssektion (52b) berechnete Abschirmungsverhältnis (Rs) gleich oder größer als der Abschirmungsverhältnis-Beurteilungswert (Ths) ist.

5. Beweglicher Körper nach einem der Ansprüche 1 bis 3, wobei die Steuervorrichtung (50) ferner umfasst:
eine Abschirmungsverhältnis-Berechnungssektion (52b), die dazu konfiguriert ist, ein Verhältnis eines Winkels zu berechnen, der von einem abschirmenden Objekt eingenommen wird, das das zu erfassende Objekt ist, das sich innerhalb eines vorbestimmten Erfassungsabstandes (Ds) von einer Erfassungssektion (41) der Erfassungsvorrichtung (40) befindet und von der Erfassungsvorrichtung (40) erfasst ist, relativ zu einem erfassbaren Winkelbereich (Ah), in dem die Erfassungsvorrichtung (40) das zu erfassende Objekt erfassen kann, als ein Abschirmungsverhältnis (Rs), das ein Verhältnis eines Bereichs ist, in dem das abschirmende Objekt die Erfassungssektion (41) der Erfassungsvorrichtung (40) abschirmt, relativ zu einem Bereich, der durch die Erfassungsvorrichtung (40) erfassbar ist;
eine Abschirmungsverhältnis-Beurteilungswert-Berechnungssektion (52c), die dazu konfiguriert ist, einen Abschirmungsverhältnis-Beurteilungswert (Ths) basierend auf den Eingabeinformationen zu berechnen, und
eine Abschirmungsverhältnis-Änderungsrate-Berechnungssektion (152e), die dazu konfiguriert ist, eine Abschirmungsverhältnis-Änderungsrate (Rsh) zu berechnen, die eine Änderungsrate des Abschirmungsverhältnisses (Rs) ist, und
eine zweite Abschirmungszustand-Beurteilungssektion (152g), die dazu konfiguriert ist, zu beurteilen, dass sich die Erfassungsvorrichtung (40) in einem Abschirmungszustand befindet, in dem das Hindernis nicht erfasst werden kann, wenn die durch die Abschirmungsverhältnis-Änderungsrate-Berechnungssektion (152e) berechnete Abschirmungsverhältnis-Änderungsrate (Rsh) kleiner ist als ein Abschirmungsverhältnis-Änderungsrate-Beurteilungswert (Thsh).

6. Beweglicher Körper nach Anspruch 4 oder 5, wobei die Steuervorrichtung (50) ferner umfasst:
eine Vorbestimmter-Erfassungsabstand-Berechnungssektion (52a), die dazu konfiguriert ist, den vorbestimmten Erfassungsabstand (Ds) basierend auf den Eingabeinformationen zu berechnen.

## Revendications

1. Corps mobile configuré pour se déplacer, entraîné par un dispositif d'entraînement (20) conformément à une entrée dans un dispositif de manœuvre (30) par un occupant du corps mobile, dans lequel le corps mobile comprend :
un dispositif de détection (40) configuré pour détecter un objet à détecter ; et
un dispositif de commande (50) configuré pour commander le corps mobile à se déplacer par la commande d'une quantité d'entraînement du dispositif d'entraînement (20) sur la base d'informations d'entrée qui sont des informations entrées dans le dispositif de manœuvre (30), dans lequel le dispositif de commande (50) inclut :
une première partie de formation de zone (51c) configurée pour former une première zone (A1) s'étendant le long d'une course prédite (Wy) du corps mobile prédite sur la base des informations d'entrée de sorte que la forme de la première zone (A1) est variable en fonction de la variation de la course prédite (Wy) due à la variation des informations d'entrée ;
une seconde partie de formation de zone (51d) configurée pour former une seconde zone (A2) qui possède une taille prédéterminée le long de la direction de déplacement,
une partie de détection d'existence d'obstacle (51e) configurée pour détecter si un obstacle, qui est l'objet à détecter, existe ou non dans la première zone (A1) ou dans la seconde zone (A2) en tant que zone environnante située à l'intérieur d'une distance prédéterminée du corps mobile ; et
une partie de limitation de quantité d'entraînement (51f) configurée pour limiter la quantité d'entraînement du dispositif d'entraînement (20) à une quantité d'entraînement de limitation, tandis que l'obstacle est détecté comme étant existant dans au moins l'une de la première zone (A1) et de la seconde zone (A2) par la partie de détection d'existence d'obstacle (51e), dans lequel par la limitation d'une quantité d'entraînement maximale du dispositif d'entraînement (20) à la quantité d'entraînement de limitation, la vitesse maximale de la vitesse de déplacement rectiligne est limitée ;
dans lequel la partie de limitation de quantité d'entraînement (51f) est configurée pour limiter la vitesse maximale de la vitesse de déplacement rectiligne à une première vitesse de déplacement rectiligne maximale, tandis que l'obstacle est détecté dans la première zone (A1), et pour limiter la vitesse maximale de la vitesse de déplacement rectiligne à une seconde vitesse de déplacement rectiligne maximale, tandis que l'obstacle est détecté dans la seconde zone (A2),
dans lequel, si l'obstacle est détecté dans une zone de chevauchement (A3) qui chevauche la première zone et la seconde zone, la vitesse maximale de la vitesse de déplacement rectiligne est limitée à la plus petite parmi la première vitesse rectiligne maximale et la seconde vitesse de déplacement rectiligne maximale, quelle que soit la plus petite ;
dans lequel la première zone est formée pour inclure des mailles (G) où la course prédite (Wy) est positionnée sur des coordonnées polaires (C) ayant un point d'origine (C0) correspondant à la position d'une partie de détection (41) du dispositif de détection (40) ; et
dans lequel la seconde zone (A2) étant formée pour avoir une forme de secteur dont la taille est définie à l'avance avec le point d'origine (C0) sur les coordonnées polaires (C) comme centre de la forme de secteur.

2. Corps mobile selon la revendication 1, dans lequel le dispositif de commande (50) inclut en outre :
une partie de maintien de limitation de quantité d'entraînement (51h) configurée pour maintenir la quantité d'entraînement du dispositif d'entraînement (20) à la quantité d'entraînement de limitation, tandis que le corps mobile se déplace pendant une durée de déplacement (Tm) prédéterminée ou se déplace sur une distance de déplacement (Dm) prédéterminée après une variation de résultat de détection par la partie de détection d'existence d'obstacle (51e), d'un résultat selon lequel l'obstacle est détecté à un résultat selon lequel l'obstacle n'est pas détecté.

3. Corps mobile selon la revendication 1 ou 2, dans lequel,
une largeur de la seconde zone (A2) est définie pour être supérieure à une largeur du corps mobile.

4. Corps mobile selon l'une quelconque des revendications 1 à 3, dans lequel le dispositif de commande (50) inclut en outre :
une partie de calcul de rapport masqué (52b) configurée pour calculer un rapport d'un angle occupé par un objet masquant, qui est l'objet à détecter, situé à l'intérieur d'une distance de détection (Ds) prédéterminée d'une partie de détection (41) du dispositif de détection (40) et détecté par le dispositif de détection (40), par rapport à une plage angulaire détectable (Ah) dans laquelle le dispositif de détection (40) peut détecter l'objet à détecter, sous la forme d'un rapport masqué (Rs) qui est un rapport d'une zone dont l'objet masquant masque la partie de détection (41) du dispositif de détection (40) par rapport à une zone qui est détectable par le dispositif de détection (40) ;
une partie de calcul de valeur de jugement de rapport masqué (52c) qui est configurée pour calculer une valeur de jugement (Ths) de rapport masqué sur la base des informations d'entrée ; et
une première partie de jugement d'état masqué (52d) configurée pour juger que le dispositif de détection (40) est dans un état masqué tel que l'obstacle ne peut pas être détecté, lorsque le rapport masqué (Rs) calculé par la partie de calcul de rapport masqué (52b) est égal ou supérieur à la valeur de jugement (Ths) de rapport masqué.

5. Corps mobile selon l'une quelconque des revendications 1 à 3, dans lequel le dispositif de commande (50) inclut en outre :
une partie de calcul de rapport masqué (52b) configurée pour calculer un rapport d'un angle occupé par un objet masquant, qui est l'objet à détecter, situé à l'intérieur d'une distance de détection (Ds) prédéterminée d'une partie de détection (41) du dispositif de détection (40) et détecté par le dispositif de détection (40), par rapport à une plage angulaire détectable (Ah) dans laquelle le dispositif de détection (40) peut détecter l'objet à détecter, sous la forme d'un rapport masqué (Rs) qui est un rapport d'une zone dont l'objet masquant masque la partie de détection (41) du dispositif de détection (40) par rapport à une zone qui est détectable par le dispositif de détection (40) ;
une partie de calcul de valeur de jugement de rapport masqué (52c) qui est configurée pour calculer une valeur de jugement (Ths) de rapport masqué sur la base des informations d'entrée ; et
une partie de calcul de taux de variation de rapport masqué (152e) configurée pour calculer un taux de variation (Rsh) de rapport masqué qui est un taux de variation du rapport masqué (Rs) ; et
une seconde partie de jugement d'état masqué (152g) configurée pour juger que le dispositif de détection (40) est dans un état masqué tel que l'obstacle ne peut pas être détecté, lorsque le taux de variation (Rsh) de rapport masqué calculé par la partie de calcul de taux de variation de rapport masqué (152e) est inférieur à une valeur de jugement (Thsh) de taux de variation de rapport masqué.

6. Corps mobile selon la revendication 4 ou 5, dans lequel le dispositif de commande (50) inclut en outre :
une partie de calcul de distance de détection prédéterminée (52a) configurée pour calculer la distance de détection (Ds) prédéterminée sur la base des informations d'entrée.
